# EUROPÄISCHE PATENTSCHRIFT

(11) **EP 1 608 693 B1**
(45) Veröffentlichungstag und Bekanntmachung des Hinweises auf die Patenterteilung: **02.02.2011**
(21) Anmeldenummer: 04724996.6
(22) Anmeldetag: 01.04.2004
(51) Int. Cl.: C08G 18/08, C08G 18/28, C08G 18/12

(54) **ELEKTROSTERISCH STABILISIERTE WÄSSRIGE POLYURETHAN-HARZE, VERFAHREN ZU IHRER HERSTELLUNG UND DEREN VERWENDUNG**
ELECTROSTERICALLY STABILIZED AQUEOUS POLYURETHANE RESINS, METHOD FOR THE PRODUCTION THEREOF, AND USE THEREOF
RESINES POLYURETHANES AQUEUSES A STABILISATION ELECTROSTERIQUE, LEURS PROCEDES DE PRODUCTION ET LEUR UTILISATION

(30) Priorität: 03.04.2003 DE 10315175
(43) Veröffentlichungstag der Anmeldung: 28.12.2005
(73) Patentinhaber: Construction Research & Technology GmbH, 83308 Trostberg (DE)
(72) Erfinder: STEIDL, Norbert, 83361 Kienberg (DE); MAIER, Alois, 84549 Engelsberg (DE); WOLFERTSTETTER, Franz, 83349 Palling (DE); HUBER, Christian, 83308 Trostberg (DE); RASPL, Sascha, 84518 Garching (DE)
(74) Vertreter: Böhm, Brigitte
(86) Internationale Anmeldenummer: PCT/EP2004/003480
(87) Internationale Veröffentlichungsnummer: WO 2004/087779

(56) Entgegenhaltungen:
- EP-A- 0 595 149
- DE-A- 2 651 505
- DE-A- 10 122 444

## Beschreibung

Die vorliegende Erfindung betrifft elektrosterisch stabilisierte wässrige Polyurethan-Dispersionen, ein Verfahren zu ihrer Herstellung sowie deren Verwendung zur Modifizierung und Vergütung von u.a. mineralischen Bindemitteln.

Die Bindemittel-Klasse der wässrigen bzw. wasserbasierenden Polyurethane ist seit über 40 Jahren bekannt. Das Eigenschaftsprofil der wasserbasierenden Polyurethane wurde in den vergangenen Jahrzehnten kontinuierlich verbessert, was durch eine Vielzahl von Patentschriften und Veröffentlichungen zu diesem Themenkreis eindrucksvoll belegt wird. Zur Chemie und Technologie der wasserbasierenden Polyurethane sei auf D. Dieterich, K. Uhlig in Ullmann's Encyclopedia of Industrial Chemistry, Sixth Edition 1999 Electronic Release. Wiley-VCH; D. Dieterich in Houben-Weyl, Methoden der Organischen Chemie. Bd. E20, H. Bartl, J. Falbe (Hrsg.), Georg Thieme Verlag, Stuttgart 1987, S. 1641ff.; D. Dieterich, Prog. Org. Coat. 9 (1981) 281-330; J. W. Rosthauser, K. Nachtkamp, Journal of Coated Fabrics 16 (1986) 39-79; R. Arnoldus, Surf. Coat. 3 (Waterborne Coat.) (1990), 179-98 verwiesen.

Emulgatorfreie selbstemulgierende Polyurethane sind seit geraumer Zeit bekannt. Sie enthalten chemisch eingebaute hydrophile Zentren, die eine Selbstemulgierbarkeit des ansonsten hydrophoben Polyurethan-Backbones gewährleistet. Prinzipiell unterscheidet man zwei verschiedene Arten kovalent gebundener hydrophiler Zentren. Dies können einerseits ionische Gruppen sein, wie z.B. Carboxylat- oder Sulfonat-Gruppen (elektrostatische Stabilisierung), andererseits aber auch hydrophile nichtionische Gruppen wie Polyethylenoxide (sterische Stabilisierung).

Die Polyurethan-Dispersionen besitzen je nach Art des hydrophilen Zentrums verschiedene charakteristische Eigenschaften. Ionisch stabilisierte Polyurethan-Dispersionen sind gegen Temperaturerhöhung weitestgehend beständig, da die Löslichkeit der enthaltenen Salz-Gruppen praktisch temperaturunabhängig ist. Nichtionisch stabilisierte Polyurethan-Dispersionen dagegen koagulieren aufgrund der geringer werdenden Wasserlöslichkeit der Polyethylenoxid-Seitenketten beim Erhitzen bereits bei Temperaturen von ca. 60 °C.
Im Gegensatz zu ionisch stabilisierten Polyurethan-Dispersionen besitzen diese eine außerordentliche Elektrolytbeständigkeit und sind auch nach dem Gefrieren und Auftauen noch stabil.

Die eingebauten hydrophilen Zentren setzen allerdings die Wasserbeständigkeit getrockneter Filme von Polyurethan-Dispersionen naturgemäß erheblich herab.

Es ist jedoch bekannt, dass durch einen kombinierten Einbau von ionischen und seitenständigen nichtionischen hydrophilen Gruppen die Gesamtzahl der hydrophilen Zentren wesentlich geringer gehalten werden kann, als dies bei ausschließlicher Verwendung einer der beiden möglich wäre ohne eine gute Dispergierbarkeit zu beeinträchtigen.

Ionische und nichtionische hydrophile Gruppen wirken hier außerdem synergistisch, d.h. die auf diese Weise stabilisierte Polyurethan-Dispersion ist zugleich gegen Frost und Erhitzen stabil und besitzt zudem noch Elektrolytstabilität.

In der US 3 905 929 B1 werden wasserdispergierbare rein nicht-ionisch stabilisierte Polyurethane mit seitenständigen Polyalkylenoxid-Ketten beschrieben. Die Polyalkylenoxid-Seitenketten werden über eine Diol-Komponente in die Polyurethan-Hauptkette eingebaut. Diese wird aus einem monoalkohol-gestarteten Polyether, bestehend aus vorwiegend Ethylenoxid-Einheiten und ggf. Butylenoxid-, Styroloxid oder Propylenoxid-Einheiten, durch Umsetzung mit einem 3 - 10-fachen Überschuss eines Diisocyanats und anschließender Reaktion mit Diethanolamin oder vergleichbarer Verbindungen hergestellt. Das überschüssige Diisocyanat wird zur Unterdrückung der Bisurethan-Bildung vor dem letzten Reaktionsschritt destillativ entfernt. Hier soll allein durch überschüssiges Diisocyanat die Bildung von Bisurethan verhindert werden. Ein Katalysator zur Erhöhung der Selektivität der Addition einer Hydroxylgruppe an die jeweils reaktivere Isocyanat-Gruppe wird hier allerdings nicht verwendet. Gemäß der US 3 920 598 B1 wird ein Verfahren offenbart, bei dem die Polyethylenoxid-Kette über eine Allophanat- oder Biuret-Bindung kovalent an ein Diisocyanat-Molekül gebunden wird.

Aus der DE 25 51 094 A1 sind in Wasser dispergierbare emulgatorfreie Polyurethane mit end- oder seitenständigen Polyalkylenoxid-Polyetherketten (nichtionische hydrophile Gruppen) in Verbindung mit ionischen hydrophilen Zentren bekannt, wobei die ionischen Zentren quarternäre Ammonium-, Carboxylat- oder Sufonationen sind, die mit geeigneten salzbildenden Gegenionen verbunden sind. Der kombinierte Einbau erlaubt es, dass die Gesamtzahl an hydrophilen Gruppen wesentlich geringer gehalten werden kann als dies bei ausschließlicher Verwendung von ionischen bzw. nichtionischen Gruppen möglich ist. Die seitenständigen Polyether-Einheiten, die im wesentlichen aus Ethylenoxid-Einheiten aufgebaut sind, aber auch Propylenoxid, Butylenoxid, Styroloxid oder Polytetrahydrofuran enthalten können, werden hier über eine Diol- bzw. Diisocyanat-Komponente in das Prepolymer eingebaut.

Gemäß DE 26 51 505 C2 werden kationische wasserdispergierbare Polyurethansysteme in Verbindung mit end- oder seitenständigen Polyalkylenoxid-Polyetherketten beschrieben, die ebenfalls über eine Diol- bzw. Diisocyanat-Komponente in das Prepolymer eingebaut werden.

In beiden Patenten wird die Effektivität der hydrophilen Gruppen ausschließlich über deren Anzahl definiert, nicht über deren Verteilung im Prepolymer. Aus der DE 23 14 512 A1 bzw. DE 23 14 513 A1 sind emulgatorfreie wässrige Polyurethane bekannt, die ausschließlich nichtionisch über Polyethylenoxid-Seitenketten stabilisiert sind, welche über eine Diol-Komponente bzw. Diisocyanat-Komponente in das Prepolymer eingebaut werden.

In der DE 27 30 514 A1 werden elektrolytstabile wässrige Lösungen von Polyurethanionomeren offenbart. Der Einbau hydrophiler Polyethersegmente innerhalb der Polyurethan-Kette, seiten- oder endständig, bewirkt einen Schutz gegen Elektrolyte bei hohen Ionenladungen. Durch den relativ hohen Anteil hydrophiler Gruppen sind die Wasserbeständigkeiten ausgehärteter Filme von diesen Polyurethansystemen nicht besonders gut.

Entsprechend der DE 26 59 617 C2 wird ein Verfahren zur Herstellung von wässrigen, bei Raumtemperatur stabilen, wasserlösliche Elektrolyte enthaltenden ionischen Polyurethan-Dispersionen mit end- oder seitenständigen Ethylenoxid-Ketten offenbart, die dadurch zwar weniger frostempfindlich und stabil gegen Elektrolyte enthaltende Additive wie z.B. Pigmente und Füllstoffe sind, jedoch aufgrund des gelösten Elektrolyts eine hohe Wärmeempfindlichkeit aufweisen.

Eine Verbesserung des in der DE 25 51 094 A1 beschriebenen Verfahrens wird in DE 28 16 815 A1 vorgestellt. Es werden hier in Wasser dispergierbare oder lösliche Polyurethane mit end- oder seitenständigen hydrophilen Aufbaukomponenten, die sowohl Sulfonatgruppen als auch innerhalb einer Polyetherkette angeordnete Ethylenoxid-Einheiten aufweisen. Bei allen vorher genannten Patenten bzw. Offenlegungsschriften wurden die beiden hydrophilen Gruppierungen (ionische und nichtionische) getrennt voneinander in die Polyurethankette eingebaut.

Schließlich werden gemäß DE 38 31 169 A1 bzw. DE 38 31 170 A1 lösliche oder wasserdispergierbare nichtionische Polyurethane mit Polyethylenoxid-Seitenketten in Kombination mit freien nicht neutralisierten Säure- oder freien nicht neutralisierten tertiären Amino-Gruppen beschrieben, was zu einer erhöhten Lagerstabilität führen soll.

Als potentielle Anwendungen für die in den oben genannten Patenten bzw. Offenlegungsschriften beschriebenen wässrigen Polyurethansysteme sind in der Regel Bindemittel für dünne Beschichtungen bzw. Imprägnierungen von verschiedenen Werkstoffen wie z.B. Textilien, Holz, Leder Metall, Keramik usw. genannt.

Die benötigte Menge an eingebauten hydrophilen ionischen und nichtionischen Komponenten ist jedoch in allen Fällen verhältnismäßig hoch, wenn stabile wässrige Systeme erhalten werden sollen, was zwangsläufig eine Verschlechterung der Wasserbeständigkeit mit sich bringt und daneben negative Auswirkungen auf das gesamte Eigenschaftsprofil des Polyurethansystems hat. Dies liegt an der durch das Herstellungsverfahren bedingten ungleichmäßigen Verteilung der hydrophilen Polyalkylenoxid-Seitenketten entlang des Polyurethan-Backbones, was zu einem erhöhten Gesamtbedarf an hydrophilen Zentren führt.

Auch die Verarbeitungseigenschaften sind bei diesen Polyurethansystemen, in denen das Verhältnis von ionischer und nichtionischer Stabilisierung nicht optimal abgestimmt ist, nicht akzeptabel, insbesondere in Systemen mit mineralischen Bindemitteln, wie zum Beispiel zementbasierenden Ausgleichsmassen.

Der vorliegenden Erfindung lag daher die Aufgabe zugrunde, anionisch modifizierte elektrosterisch stabilisierte wässrige Polyurethan-Dispersionen mit optimiertem Verhältnis zwischen ionischen und nichtionischen hydrophilen Gruppierungen sowie gleichmäßiger Verteilung entlang des Polyurethan-Backbones zur Modifizierung und Vergütung von in erster Linie mineralischen Bindemitteln zu entwickeln, welche die genannten Nachteile des Standes der Technik nicht aufweisen, sondern verbesserte Material- und Applikationseigenschaften besitzen und gleichzeitig unter Berücksichtigung ökologischer, ökonomischer und physiologischer Aspekte hergestellt werden können.

Diese Aufgabe wurde erfindungsgemäß durch die Bereitstellung von anionisch modifizierten elektrosterisch stabilisierten wässrigen Polyurethan-Harzen gelöst, die erhältlich sind durch
a) die Herstellung eines hydrophilen und lösemittelfreien Makromonomers (A)(ii) mit monomodaler Molekularmassenverteilung, wobei man
a₁) 50 bis 100 Gewichtsteile eines hydrophilen Alkyl- und/oder Arylpolyalkylenglykols (A)(i) mit einer gegenüber Isocyanat-Gruppen reaktiven primären und/oder sekundären Hydroxyl-Gruppe und einer Molekularmasse von 250 bis 5000 Dalton mit 1 bis 100 Gewichtsteilen eines Polyisocyanates (B)(i), bestehend aus mindestens einem Diisocyanat, Polyisocyanat, Polyisocyanat-Derivat oder Polyisocyanat-Homologen mit zwei oder mehreren aliphatischen oder aromatischen Isocyanat-Gruppen gleicher oder unterschiedlicher Reaktivität ggf. in Gegenwart eines Katalysators zur Reaktion bringt sowie
a₂) das Preaddukt aus Stufe a₁) vollständig mit 0,5 bis 200 Gewichtsteilen einer Verbindung (C) mit zwei oder mehreren gegenüber Isocyanat-Gruppen reaktiven primären und/oder sekundären Amino-Gruppen und/oder Hydroxyl-Gruppen und einer Molekularmasse von 50 bis 500 Dalton zur Reaktion bringt sowie
b) die Herstellung der Polyurethan-Dispersion, wobei man
b₁) 2 bis 50 Gewichtsteile des hydrophilen und lösemittelfreien Makromonomers (A)(ii) mit monomodaler Molekularmassenverteilung mit zwei oder mehreren gegenüber Isocyanat-Gruppen reaktiven Hydroxyl-Gruppen und einer Molekularmasse von 500 bis 5500 Dalton mit 25 bis 250 Gewichtsteilen einer Polyisocyanat-Komponente (B)(ii), bestehend aus mindestens einem Polyisocyanat, Polyisocyanat-Derivat oder Polyisocyanat-Homologen mit zwei oder mehreren (cyclo)aliphatischen oder aromatischen Isocyanat-Gruppen ggf. unter Zugabe von 0 bis 50 Gewichtsteilen einer Lösemittel-Komponente (D) und ggf. in Gegenwart eines Katalysators umsetzt,
b₂) das Polyurethan-Preaddukt aus Stufe b₁) mit der Zusammensetzung mit 50 bis 100 Gewichtsteilen eines polymeren Polyols (A)(iii) mit zwei oder mehreren gegenüber Isocyanat-Gruppen reaktiven Hydroxyl-Gruppen und einer Molekularmasse von 500 bis 5000 Dalton
   und ggf.
   mit 0,5 bis 10 Gewichtsteilen einer niedermolekularen Polyolkomponente (A)(iv) mit 2 oder mehreren Hydroxyl-Gruppen und einem Molekulargewicht von 50 bis 499 Dalton ggf. in Gegenwart eines Katalysators umsetzt,
b₃) das Polyurethan-Preaddukt aus Stufe b₂) mit 2 bis 20 Gewichtsteilen einer niedermolekularen und anionisch modifizierbaren Polyol-Komponente (A)(v) mit einer, zwei oder mehreren gegenüber Isocyanat-Gruppen reaktiven Hydroxyl-Gruppen und einer oder mehreren inerten Carbonsäure- und/oder Sulfonsäure-Gruppe(n), welche mit Hilfe von Basen teilweise oder vollständig in Carboxylat- bzw. Sulfonat-gruppen überführt werden können oder bereits in Form von Carboxylat-und/oder Sulfonat-Gruppen vorliegen, und einer Molekularmasse von 100 bis 1000 Dalton ggf. in Gegenwart eines Katalysators umsetzt,
b₄) das Polyurethan-Prepolymer aus Stufe b₃) vor oder während der Dispergierung in Wasser zur teilweisen oder vollständigen Neutralisation der Säure-Gruppen mit 2 bis 20 Gewichtsteilen einer Neutralisations-Komponente (E) versetzt,
b₅) das ggf. (teil-)neutralisierte Polyurethan-Prepolymer aus Stufe b₄) in 50 bis 1500 Gewichtsteilen Wasser, welches ggf. noch 0 bis 100 Gewichtsteile einer Formulierungs-Komponente (F) enthält, dispergiert und schließlich
b₆) die (teil-)neutralisierte Polyurethan-Prepolymer-Dispersion aus Stufe b₅) mit 3 bis 60 Gewichtsteilen einer Kettenverlängerungs-Komponente (G) sowie anschließend oder gleichzeitig mit 0 bis 30 Gewichtsteilen einer Kettenstoppungs-Komponente (H) umsetzt.

Es hat sich nämlich überraschenderweise gezeigt, dass durch die Herstellung und Verwendung eines hydrophilen und lösemittelfreien Makromonomers (A)(ii) mit monomodaler Molekularmassenverteilung gemäss den Reaktionsstufen a₁) bis a₂) in Verbindung mit einem dreistufigen Herstellungsverfahren für das Polyurethan-Prepolymer gemäss den Reaktionsstufen b₁) bis b₃) folgende Vorteile für die elektrosterisch stabilisierte Polyurethan-Dispersionen ergeben:
- keine Nebenprodukte bei der Herstellung des Makromonomers (A)(ii) bedingt durch die spezielle Zusammensetzung des gegenüber Polyisocyanaten selektiven hydrophilen Alkyl- und/oder Arylpolyalkylenglykols (A)(i)
- Kompatibilität zwischen nichtionischem Stabilisator (Makromonomer (A) (ii)) und Polyurethan-Backbone bereits im Rahmen der Synthese des Polyurethan-Prepolymers
- optimale Anordnung / Verteilung des nichtionischen Stabilisators (Makromonomer (A)(ii)) im Polyurethan-Polymer durch dreistufiges Herstellungsverfahren für das Polyurethan-Prepolymer
- insgesamt sehr geringer Stabilisator-Bedarf (anionisch + nichtionisch) und vergleichsweise sehr geringe Hydrophilie
- keine Koagulation bei pH 1 - 14
- echte Dispersion: hohe Festkörpergehalte bei niedriger Viskosität bedingt durch sehr geringen Stabilisator-Bedarf (anionisch + nichtionisch) (vgl. Stand der Technik: Lösungen: hohe Viskositäten bei hohen Festkörpergehalten bedingt durch sehr hohen Stabilisator-Bedarf)
- vollständig VOC-freie Bindemittel zugänglich
- hohe Langzeit-Lagerstabilität (vgl. Stand der Technik: langsame Destabilisierung durch Nebenprodukte in nichtionischen Stabilisatoren)
- Hydrolyseresistenz und Tieftemperaturflexibilität im Vergleich mit Bindemitteln auf Acrylat-Basis für ähnliche Anwendungen
- Eigenschaftsprofil, Materialeigenschaften und Verarbeitungsverhalten werden durch neuartige Polymer-Struktur gegenüber dem Stand der Technik positiv beeinflusst

Die erfindungsgemäße elektrosterisch stabilisierte Polyurethan-Dispersion ist definiert durch ihr mehrstufiges Herstellverfahren. In der Reaktionstufe a) wird zunächst ein hydrophiles und lösemittelfreies Makromonomer (A)(ii) mit monomodaler Molekularmassenverteilung hergestellt, das dann in der Reaktionstufe b) weiter zu einer lösemittelarmen oder lösemittelfreien, elektrosterisch stabilisierten Polyurethan-Dispersion umgesetzt wird.

Zur Durchführung dieses Verfahrens werden unter Anwendung der in der Polyurethan-Chemie üblichen Techniken in der Reaktionsstufe a₁) 50 bis 100 Gewichtsteile eines hydrophilen Alkyl- und/oder Arylpolyalkylenglykols (A)(i) mit einer gegenüber Isocyanat-Gruppen reaktiven primären und/oder sekundären und/oder tertiären Hydroxyl-Gruppe und einer Molekularmasse von 250 bis 5000 Dalton mit 1 bis 100 Gewichtsteilen eines Polyisocyanates (B)(i), bestehend aus mindestens einem Diisocyanat, Polyisocyanat, Polyisocyanat-Derivat oder Polyisocyanat-Homologen mit zwei oder mehreren (cyclo)aliphatischen oder aromatischen Isocyanat-Gruppen gleicher oder unterschiedlicher Reaktivität ggf. in Gegenwart eines Katalysators in Abwesenheit von Lösemitteln zur Reaktion gebracht, wobei die Reaktionsbedingungen und die Selektivitäten der Komponenten (A)(i) und (B)(i) so gewählt werden, dass nur eine Isocyanat-Gruppe der Komponente (B)(i) mit der Komponente (A)(i) reagiert. Die Herstellung des Polyurethan-Preaddukts gemäss Reaktionsstufe a₁) erfolgt vorzugsweise in der Weise, dass die Komponente (A)(i) innerhalb eines Zeitraumes von einigen Minuten bis zu einigen Stunden der Komponente (B)(i) zugesetzt bzw. zudosiert wird oder alternativ dazu, dass die Komponente (B)(i) innerhalb eines Zeitraumes von einigen Minuten bis zu einigen Stunden der Komponente (A)(i) zugesetzt bzw. zudosiert wird.

In der nachfolgenden Reaktionsstufe a₂) wird das einheitliche Preaddukt aus Stufe a₁) vollständig mit 0,5 bis 200 Gewichtsteilen einer Verbindung (C) mit zwei oder mehreren gegenüber Isocyanat-Gruppen reaktiven primären und/oder sekundären Amino-Gruppen und/oder Hydroxyl-Gruppen und einer Molekularmasse von 50 bis 500 Dalton in Abwesenheit von Lösemitteln zur Reaktion gebracht, wobei die Reaktionsbedingungen und die Selektivität der Komponente (C) so gewählt werden, dass nur eine reaktive Gruppe der Komponente (C) mit der/den freien Isocyanat-Gruppe(n) des Preaddukts reagiert. Die Komponente (A)(ii) weist aufgrund der Abwesenheit von unerwünschten Nebenprodukten, die durch Addition von zwei oder mehreren Molekülen (A)(i) an ein Molekül (B)(i) in Stufe a₁) und demgemäss durch Addition von zwei oder mehreren Molekülen (C) an ein Molekül (B)(i) in Stufe a₂) entstehen könnten, eine monomodale Molekularmassenverteilung auf.

Dies konnte durch MALDI-TOF-Untersuchungen explizit nachgewiesen werden. Im Gegensatz zum bereits zitierten Stand der Technik treten neben dem gewünschten Makromonomer (A)(ii) also keine Nebenprodukte in Form von externen Emulgatoren und Vernetzern auf, die zu einer deutlichen Verschlechterung der Produktqualität der resultierenden Polyurethan-Dispersion führen würden. Erstere werden nicht in das Polyurethan-Polymer eingebaut und verringern damit die Stabilität der Dispersion, zweitere führen zu einer Übervernetzung im Polyurethan-Polymer und verringern damit ebenfalls die Stabilität der Dispersion. Da immer beide Nebenprodukte auftreten, verstärken sich deren Effekte gegenseitig. Bedingt durch diese Tatsache eignen sich die gemäß Stand der Technik hergestellten Produkte auch nur bedingt für bauchemische Anwendungen. Da die Bildung der Nebenprodukte sehr stark von der Prozessführung abhängt, muss bei den literaturbekannten Systemen auch die Reproduzierbarkeit stark in Frage gestellt werden.

Die Durchführung der Reaktionsstufen a₁) und a₂) ist im Hinblick auf die Reaktionsbedingungen relativ unkritisch. Der Reaktionsansatz wird in den Reaktionsstufen a₁) und a₂) unter Ausnutzung der Exothermie der Polyadditions-Reaktion bis zum Erreichen des berechneten bzw. theoretischen NCO-Gehaltes bei 10 bis 30 °C, vorzugsweise bei 15 bis 25 °C, unter Inertgas-Atmosphäre gerührt. Die erforderlichen Reaktions-Zeiten liegen im Bereich von einigen Minuten bis einigen Stunden und werden durch Reaktionsparameter wie die Reaktivität der Komponenten, die Stöchiometrie der Komponenten und die Temperatur maßgebend beeinflusst.

Das NCO/OH-Equivalentverhältnis in Stufe a₁) wird auf 1,9 bis 2,1 und das NCO/OH+NH-Equivalentverhältnis in Stufe a₂) wird auf 0,95 bis 1,05 eingestellt.

In der nachfolgenden Reaktionsstufe b₁) werden 2 bis 50 Gewichtsteile des hydrophilen und lösemittelfreien Makromonomers (A)(ii) mit monomodaler Molekularmassenverteilung mit zwei oder mehreren gegenüber Isocyanat-Gruppen reaktiven Hydroxyl-Gruppen und einer Molekularmasse von 500 bis 5500 Dalton mit 25 bis 250 Gewichtsteilen einer Polyisocyanat-Komponente (B)(ii), bestehend aus mindestens einem Polyisocyanat, Polyisocyanat-Derivat oder Polyisocyanat-Homologen mit zwei oder mehreren (cyclo)aliphatischen oder aromatischen Isocyanat-Gruppen ggf. unter Zugabe von 0 bis 50 Gewichtsteilen einer Lösemittel-Komponente (D) und ggf. in Gegenwart eines Katalysators umgesetzt. Die Herstellung des Polyurethan-Preaddukts gemäss Reaktionsstufe b₁) erfolgt vorzugsweise in der Weise, dass die Komponente (A)(ii) innerhalb eines Zeitraumes von einigen Minuten bis zu einigen Stunden der Komponente (B)(ii) zugesetzt bzw. zudosiert wird oder alternativ dazu das Komponente (B)(ii) innerhalb eines Zeitraumes von einigen Minuten bis zu einigen Stunden der Komponente (A)(ii) zugesetzt bzw. zudosiert wird. In der nachfolgenden Reaktionssstufe b₂) wird das Polyurethan-Preaddukt aus Stufe b₁) mit 50 bis 100 Gewichtsteilen eines polymeren Polyols (A)(iii) mit zwei oder mehreren gegenüber Isocyanat-Gruppen reaktiven Hydroxyl-Gruppen und einer Molekularmasse von 500 bis 5000 Dalton und ggf. mit 0,5 bis 10 Gewichtsteilen einer niedermolekularen Polyolkomponente (A)(iv) mit 2 oder mehreren Hydroxyl-Gruppen und einem Molekulargewicht von 50 bis 499 Dalton ggf. in Gegenwart eines Katalysators umgesetzt. Anschließend wird in der Reaktionssstufe b₃) das Polyurethan-Preaddukt aus Stufe b₂) mit 2 bis 20 Gewichtsteilen einer niedermolekularen und anionisch modifizierbaren Polyol-Komponente (A)(v) mit einer, zwei oder mehreren gegenüber Isocyanat-Gruppen reaktiven Hydroxyl-Gruppen und einer oder mehreren inerten Carbonsäure- und/oder Sulfonsäure-Gruppe(n), welche mit Hilfe von Basen teilweise oder vollständig in Carboxylat- bzw. Sulfonatgruppen überführt werden können oder bereits in Form von Carboxylat- und/oder Sulfonat-Gruppen vorliegen, und einer Molekularmasse von 100 bis 1000 Dalton ggf. in Gegenwart eines Katalysators umgesetzt. Die in den Reaktionstufen b₂) bzw. b₃) eingesetzten Polyurethan-Preaddukte aus den Reaktionstufen b₁) bzw. b₂) können bei entsprechender Prozessführung bzw. unvollständiger Umsetzung neben Isocyanat-Gruppen und/oder Polyisocyanat-Monomeren ggf. auch noch freie Hydroxyl-Gruppen aufweisen.

Die Durchführung der Reaktionsstufen b₁), b₂) und b₃) ist im Hinblick auf die Reaktionsbedingungen relativ unkritisch. Der Reaktionsansatz wird in den Reaktionsstufen b₁), b₂) und b₃) unter Ausnutzung der Exothermie der Polyadditions-Reaktion bis zum Erreichen des berechneten bzw. theoretischen NCO-Gehaltes bei 60 bis 120 °C, vorzugsweise bei 80 bis 100 °C, unter Inertgas-Atmosphäre gerührt. Die erforderlichen Reaktions-Zeiten liegen im Bereich von einigen Stunden und werden durch Reaktionsparameter wie die Reaktivität der Komponenten, die Stöchiometrie der Komponenten und die Temperatur maßgebend beeinflusst.

Das NCO/OH-Equivalentverhältnis der Komponenten (A)(i), (A)(ii), (A)(iii), (A)(iv), (A)(v) und (B)(ii) in der Stufe b) wird auf einen Wert von 1,25 bis 2,5, vorzugsweise 1,4 bis 2,0 eingestellt.

Die Umsetzung der Komponenten (A), (B) und (C) in den Stufen a₁), b₁) und b₃) kann in Gegenwart eines für Polyadditions-Reaktionen an Polyisocyanaten üblichen Katalysators erfolgen. Bei Bedarf erfolgt ein Zusatz dieser Katalysatoren in Mengen von 0,01 bis 1 Gew.-% bezogen auf die Komponenten (A) und (B). Gebräuchliche Katalysatoren für Polyadditions-Reaktionen an Polyisocyanate sind bspw. Dibutylzinnoxid, Dibutylzinndilaurat (DBTL), Triethylamin, Zinn(II)-octoat, 1,4-Diaza-bicyclo [2,2,2]octan (DABCO), 1,4-Diaza-bicyclo[3,2,0]-5-nonen (DBN), 1,5-Diaza-bicyclo[5,4,0]-7-undecen (DBU).

Die Komponente (A)(i) besteht aus einem hydrophilen Alkyl- und/oder Arylpolyalkylenglykol mit einer gegenüber Isocyanat-Gruppen reaktiven primären und/oder sekundären Hydroxyl-Gruppe und einer Molekularmasse von 250 bis 5000 Dalton. Als geeignete hydrophile Alkyl- und/oder Arylpolyalkylenglykole können verseifungsstabile Copolymere und/oder statistische Copolymere und/oder Blockcopolymere, zusammengesetzt aus 90 bis 10 Gew.-% Ethylenoxid und 10 bis 90 Gew.-% weiteren Alkylenoxiden mit 4 bis 30 Kohlenstoffatomen pro Alkylenoxid, mit einer primären und/oder sekundären und/oder tertiären Hydroxyl-Gruppe, vorzugsweise monofunktionelles Alkyl-poly-(ethylenoxid-*co*/*ran*-alkylenoxid) und/oder Alkyl-poly-(ethylenoxid-*block*-alkylenoxid) und/oder Natriumsulfonatopropyl-poly-(ethylenoxid-*co*/*ran*-alkylenoxid) und/oder Natriumsulfonatopropyl-poly-(ethylenoxid-*block*-alkylenoxid) mit einer sekundären oder tertiären Hydroxyl-Gruppe, zusammengesetzt aus 90 bis 10 Gew.-% Ethylenoxid und 10 bis 90 Gew.-% eines weiteren Alkylenoxids, eingesetzt werden. Als Alkylenoxide werden Propylenoxid, Butylenoxid, Dodecyloxid, Isoamyloxid, Oxetan, substituierte Oxetane, α-Pinenoxid, Styroloxid, Tetrahydrofuran oder weitere aliphatische oder aromatische Alkylenoxide mit 4 bis 30 Kohlenstoffatomen pro Alkylenoxid oder Gemische daraus bevorzugt.

Die Komponente (A)(iii) besteht aus einem polymeren Polyol mit zwei oder mehreren gegenüber Polyisocyanaten reaktiven Hydroxyl-Gruppen und einer mittleren Molekularmasse (Zahlenmittel) von 500 bis 5 000 Dalton. Als geeignete polymere Polyole können lineare bzw. difunktionelle Polyalkylenglykole, aliphatische oder aromatische Polyester, Polycaprolactone, Polycarbonate, α,ω-Polymethacrylatdiole, α,ω-Dihydroxyalkylpolydimethylsiloxane, hydroxyfunktionelle Makromonomere, hydroxyfunktionelle Telechele, hydroxyfunktionelle Epoxid-Harze oder geeignete Gemische daraus eingesetzt werden. Bevorzugt werden Polyalkykenglykole eingesetzt. Geeignete Polyalkylenglykole sind beispielsweise Polypropylenglykole, Polytetramethylenglykole bzw. Polytetrahydrofurane, hydrophob modifizierte Blockcopolymere bestehend aus verseifungsstabilen Blockcopolymeren mit ABA-, BAB-oder (AB)ₙ-Struktur, wobei A ein Polymer-Segment mit hydrophobierenden Eigenschaften und B ein Polymer-Segment auf Basis Polypropylenoxid repräsentiert, mit einer mittleren Molekularmasse (Zahlenmittel) von 1 000 bis 3 000 Dalton eingesetzt. Als Polymer-Segment A werden Polybutylenoxid, Polydodecyloxid, Polyisoamyloxid, Polyoxetan, substituierte Polyoxetane, Poly-α-pinenoxid, Polystyroloxid, Polytetramethylenoxid, weitere aliphatische oder aromatische Polyoxyalkylene mit 4 bis 30 Kohlenstoffatomen pro Alkylenoxid, α,ω-Polymethacrylatdiole, α,ω-Dihydroxyalkylpolydimethylsi-loxane, Makromonomere, Telechele oder Gemische daraus bevorzugt.

Die Komponente (A)(iv) besteht aus einem niedermolekularen Polyol mit zwei oder mehreren gegenüber Polyisocyanaten reaktiven Hydroxyl-Gruppen und einer mittleren Molekularmasse von 50 bis 499 Dalton. Als geeignete niedermolekulare Polyole können beispielsweise 1,2-Ethandiol bzw. Ethylenglykol, 1,2-Propandiol bzw. 1,2-Propylenglykol, 1,3-Propandiol bzw. 1,3-Propylenglykol, 1,4-Butandiol bzw. 1,4-Butylenglykol, 1,6-Hexandiol bzw. 1,6-Hexamethylenglykol, 2-Methyl-1,3-propandiol, 2,2-Dimethyl-1,3-propandiol bzw. Neopentylglykol, 1,4-Bis-(hydroxymethyl)-cyclohexan bzw. Cyclohexandimethanol, 1,2,3-Propantriol bzw. Glycerol, 2-Hydroxymethyl-2-methyl-1,3-propanol bzw. Trimethylolethan, 2-Ethyl-2-hydroxymethyl-1,3-propandiol bzw. Trimethylolpropan, 2,2-Bis-(hydroxymethyl)-1,3-propandiol bzw. Pentaerythrit eingesetzt werden.

Die Komponente (A)(v) besteht einem niedermolekularen und anionisch modifizierbaren Polyol mit einer, zwei oder mehreren gegenüber Isocyanat-Gruppen reaktiven Hydroxyl-Gruppen und einer oder mehreren inerten Carbonsäure- und/oder Sulfonsäure-Gruppe(n), welche mit Hilfe von Basen teilweise oder vollständig in Carboxylat- bzw. Sulfonatgruppen überführt werden können oder bereits in Form von Carboxylat- und/oder Sulfonat-Gruppen vorliegen, und einer Molekularmasse von 100 bis 1000 Dalton. Als niedermolekulare und anionisch modifizierbare Polyole können beispielsweise 2-Hydroxymethyl-3-hydroxypropansäure bzw. Dimethylolessigsäure, 2-Hydroxymethyl-2-methyl-3-hydroxypropansäure bzw. Dimethylolpropionsäure, 2-Hydroxymethyl-2-ethyl-3-hydroxypropansäure bzw. Dimethylolbuttersäure, 2-Hydroxymethyl-2-propyl-3-hydroxypropansäure bzw. Dimethylolvaleriansäure, Citronensäure, Weinsäure, [Tris-(hydroxymethyl)-methyl]-3-aminopropansulfonsäure (TAPS, Fa. Raschig GmbH), Building Blocks auf Basis von 1,3-Propansulfon (Fa. Raschig GmbH) und/oder 3-Mercaptopropansulfonsäure-Natrium-Salz (MPS, Fa. Raschig GmbH) eingesetzt werden. Diese Building Blocks können ggf. auch Amino-Gruppen anstelle von Hydroxyl-Gruppen aufweisen. Bevorzugt werden Bishydroxyalkancarbonsäuren mit einer Molekularmasse von 100 bis 200 Dalton eingesetzt und insbesondere 2-Hydroxymethyl-2-methyl-3-hydroxy-propansäure bzw. Dimethylolpropionsäure (Handelsname DMPA^{□} der Fa. Trimet Technical Products, Inc.).

Die Komponenten (B)(i) und (B)(ii) bestehen aus mindestens einem Polyisocyanat, Polyisocyanat-Derivat oder Polyisocyanat-Homologen mit zwei oder mehreren aliphatischen oder aromatischen Isocyanat-Gruppen. Geeignet sind insbesondere die in der Polyurethan-Chemie hinreichend bekannten Polyisocyanate oder Kombinationen daraus. Als geeignete aliphatische Polyisocyanate können bspw. 1,6-Diisocyanatohexan (HDI), 1-Isocyanato-5-isocyanatomethyl-3,3,5-trimethyl-cyclohexan bzw. Isophorondiisocyanat (IPDI), Bis-(4-isocyanatocyclo-hexyl)-methan (H₁₂MDI), 1,3-Bis-(1-isocyana-to-1-methyl-ethyl)-benzol (m-TMXDI) bzw. technische Isomeren-Gemische der einzelnen aromatischen Polyisocyanate eingesetzt werden. Als geeignete aromatische Polyisocyanate können beispielsweise 2,4-Diisocyanatotoluol bzw. Toluoldiisocyanat (TDI), Bis-(4-isocyanatophenyl)-methan (MDI) und ggf. dessen höhere Homologe (Polymeric MDI) bzw. technische Isomeren-Gemische der einzelnen aromatischen Polyisocyanate eingesetzt werden. Weiterhin sind auch die sogenannten "Lackpolyisocyanate" auf Basis von Bis-(4-isocyanatocyclo-hexyl)-methan (H₁₂MDI), 1,6-Diisocyanatohexan (HDI), 1-Isocyanato-5-isocyanatomethyl-3,3,5-trimethylcyclohexan (IPDI) grundsätzlich geeignet. Der Begriff "Lackpolyisocyanate" kennzeichnet Allophanat-, Biuret-, Carbodiimid-, Isocyanurat-, Uretdion-, Urethan-Gruppen aufweisende Derivate dieser Diisocyanate, bei denen der Rest-Gehalt an monomeren Diisocyanaten dem Stand der Technik entsprechend auf ein Minimum reduziert wurde. Daneben können auch noch modifizierte Polyisocyanate eingesetzt werden, die beispielsweise durch hydrophile Modifizierung von "Lackpolyisocyanaten" auf Basis von 1,6-Diisocyanatohexan (HDI) zugänglich sind. Bei der Komponente (B)(i) sind die aliphatischen Polyisocyanate gegenüber den aromatischen Polyisocyanaten zu bevorzugen. Weiterhin werden Polyisocyanate mit Isocyanat-Gruppen unterschiedlicher Reaktivität bevorzugt. Bei der Komponente (B)(ii) sind 2,4-Toluendiisocyanat, Isomerengemische aus 2,4-Toluendiisocyanat und 2,6-Toluendiisocyanat oder Isomerengemische aus Isophorondiisocyanat zu bevorzugen.

Vorzugsweise werden Polyisocyanate mit Isocyanat-Gruppen unterschiedlicher Reaktivität eingesetzt, um engere Molekular-Massen-Verteilungen mit geringerer Uneinheitlichkeit zu erhalten. Dementsprechend werden Polyurethan-Prepolymere mit linearer Struktur bevorzugt, die sich aus difunktionellen Polyol- und Polyisocyanat-Komponenten zusammensetzen.

Gemäß einer bevorzugten Ausführungsform wird als Komponente (A)(i) ein monofunktionelles Polyalkylenglykol und als Komponente (B)(i) ein mindestens difunktionelles Polyisocyanat eingesetzt.

Die Komponente (C) besteht aus einer Verbindung mit zwei oder mehreren gegenüber Isocyanat-Gruppen reaktiven primären und/oder sekundären Amino-Gruppen und/oder Hydroxyl-Gruppen und einer Molekularmasse von 50 bis 500 Dalton. Als geeignete Verbindungen können beispielsweise Ethanolamin, Diethanolamin, Ethylendiamin, Diethylentriamin, N-(2-Aminoethyl)-2-aminoethanol und Trimethylolpropan eingesetzt werden. Bevorzugt wird Diethanolamin eingesetzt.

Zur Verringerung der Viskosität der Polyurethan-Prepolymere oder zur Verbesserung der Koaleszenz der Polyurethan-Dispersion können während oder nach der Herstellung gemäss der Reaktionsstufe b) organische Lösemittel zugesetzt werden. Bevorzugt enthält die Polyurethan-Dispersion weniger als 10 Gew.-% an organischen Lösemitteln. Gemäss einer besonders bevorzugten Ausführungsform liegt die Polyurethan-Dispersion Iösemittelfrei vor.

Die Lösemittel-Komponente (D) besteht aus einem gegenüber Polyisocyanaten inerten und vorzugsweise mit Wasser ganz oder teilweise mischbaren organischen Lösemittel, das nach der Herstellung in der Polyurethan-Dispersion verbleibt oder durch Destillation wieder ganz oder teilweise entfernt wird. Als geeignete Lösemittel können beispielsweise hochsiedende und hydrophile organische Lösemittel wie N-Methylpyrrolidon, Diethylenglykoldimethylether, Dipropylenglykoldimethylether (Proglyde DMM^{®} der Fa. Dow), niedrigsiedende Lösemittel wie Aceton, Butanon oder beliebige Gemische daraus eingesetzt werden. Bevorzugt wird ein hochsiedendes und hydrophiles Lösemittel wie N-Methylpyrrolidon eingesetzt, das nach der Herstellung in der Dispersion verbleibt und als Koaleszenz-Hilfsmittel fungiert.

Die Viskosität der Polyurethan-Prepolymere ist relativ niedrig und weitgehend unabhängig von der Struktur der verwendeten Polyol- und Polyisocyanat-Komponenten. Ein Zusatz von Lösemitteln zur Viskositätsverminderung oder zur Verbesserung der Dispergier-Eigenschaften der Polyurethan-Prepolymere ist meist nicht erforderlich. Die besondere Struktur der Prepolymere ermöglicht die Herstellung von Produkten mit außerordentlich hohen Festkörper-Gehalten. Außerdem werden aufgrund der gleichmäßigen Verteilung der Carboxylat- bzw. Sulfonat-Gruppen über das Polyurethan-Polymer nur sehr geringe Ladungsdichten für die Stabilisierung der entsprechenden Polyurethan- Dispersionen benötigt.

Das Polyurethan-Prepolymer aus Reaktionsstufe b₃) wird in der nachfolgenden Reaktionsstufe b₄) vor oder während der Dispergierung in 50 bis 1500 Gew.-Teilen Wasser mit 2 bis 20 Gew.-Teilen einer Neutralisations-Komponente (E) zur teilweisen oder vollständigen Neutralisation der Carbonsäure- und/oder Sulfonsäure-Gruppen umgesetzt (direkte oder indirekte Neutralisation). Im Falle einer direkten Neutralisation wird die Neutralisations-Komponente (E) bereits vor der Dispergierung in Wasser in das Polyurethan-Prepolymer eingebracht, im Falle einer indirekten Neutralisation wird die Neutralisations-Komponente (E) vor der Dispergierung im Wasser vorgelegt. Bei Bedarf kann auch eine Kombination aus direkter und indirekter Neutralisation angewendet werden.

Die Reaktions-Stufe b₄) wird vorzugsweise bei einer Temperatur von 40 bis 60 °C, insbesondere bei ca. 50 °C, durchgeführt.

Die Neutralisations-Komponente (E) besteht aus einer oder mehreren Basen, die zur vollständigen oder teilweisen Neutralisation der Carbonsäure- und/oder Sulfonsäure-Gruppen dienen. Sofern die Komponente (A) (v) bereits in Form ihrer Salze vorliegt, kann auf die Neutralisations-Komponente (E) verzichtet werden. Als geeignete Basen können beispielsweise tertiäre Amine wie N,N-Dimethylethanolamin, N-Methyldiethanolamin, Triethanolamin, N,N Dimethylisopropanolamin, N-Methyldiisopropanolamin, Triisopropylamin, N-Methylmorpholin, N-Ethylmorpholin, Triethylamin, Ammoniak oder Alkalihydroxide wie Lithiumhydroxid, Natriumhydroxid, Kaliumhydroxid eingesetzt werden. Bevorzugt werden Alkalihydroxide und insbesondere Natriumhydroxid verwendet.

Die Neutralisations-Komponente (E) wird in einer solchen Menge zugegeben, dass der Neutralisations-Grad bezogen auf die freien Carbonsäure-und/oder Sulfonsäure-Gruppen des Polyurethan-Prepolymers bei 25 bis 100 Equivalent-%, vorzugsweise bei 50 bis 100 Equivalent-%, liegt. Bei der Neutralisation werden aus den Carbonsäure- und/oder Sulfonsäure-Gruppen Carboxylat- und/oder Sulfonat-Gruppen gebildet, die zur anionischen Modifizierung bzw. Stabilisierung der Polyurethan-Dispersion dienen.

Das ggf. (teil-)neutralisierte Polyurethan-Prepolymer aus Reaktionsstufe b₄) wird in der nachfolgenden Reaktionsstufe bs) in 50 bis 1500 Gewichtsteilen Wasser, welches ggf. noch 0 bis 100 Gewichtsteile einer Formulierungs-Komponente (F) enthält (*in-situ* Formulierung), dispergiert.

Die Formulierungs-Komponente (F) besteht aus Entschäumern, Entlüftern, Gleit- und Verlaufadditiven, strahlenhärtenden Additiven, Dispergieradditiven, Substratnetzadditiven, Hydrophobierungsmitteln, Rheologieadditiven wie Polyurethan-Verdicker, Koaleszenzhilfsmitteln, Mattierungsmitteln, Haftvermittlern, Frostschutzmitteln, Antioxidantien, UV-Stabilisatoren, Bakteriziden, Fungiziden, weiteren Polymeren und/oder Polymer Dispersionen sowie Füllstoffen, Pigmenten, Mattierungsmitteln oder geeignete Kombination daraus. Die einzelnen Formulierungs-Bestandteile sind dabei als inert zu betrachten.

Die Reaktions-Stufe b₅) wird vorzugsweise bei einer Temperatur von 40 bis 60 °C, insbesondere bei ca. 50 °C, durchgeführt.

Bei der Dispergierung wird das Polyurethan-Prepolymer in das Dispergier-Medium überführt und bildet dabei eine Polyurethan-Prepolymer-Dispersion aus. Das neutralisierte Polyurethan-Prepolymer bildet dabei Mizellen, die an der Oberfläche stabilisierende Carboxylat- und/oder Sulfonat-Gruppen sowie Polyalkylenoxid-Ketten und im Inneren reaktive Isocyanat-Gruppen aufweisen. Alle kationischen Gegenionen zu den anionischen Carboxylat-und/oder Sulfonat-Gruppen sind im Dispergier-Medium gelöst. Die Begriffe "Dispergierung" bzw. "Dispersion" beinhalten, dass neben dispergierten Komponenten mit mizellarer Struktur auch solvatisierte und/oder suspendierte Komponenten enthalten sein können. Für die Überführung des Polyurethan-Prepolymers in die wässrige Phase kann entweder das Polyurethan-Prepolymer in das Dispergier-Medium oder das Dispergier-Medium in das Polyurethan-Prepolymer (Invers-Verfahren) eingerührt werden.

Die (teil-)neutralisierte Polyurethan-Prepolymer-Dispersion aus Reaktions-stufe b₅) wird in der anschließenden Reaktionsstufe b₆) mit 3 bis 60 Gewichtsteilen einer Kettenverlängerungs-Komponente (G) sowie anschließend oder gleichzeitig mit 0 bis 30 Gewichtsteilen einer Kettenstoppungs-Komponente (H) umgesetzt.

Die Reaktionsstufe b₆) wird vorzugsweise bei einer Temperatur von 30 bis 50 °C, insbesondere bei ca. 40 °C, durchgeführt.

Die Kettenverlängerungs-Komponente (G) besteht aus einem Polyamin mit zwei oder mehreren gegenüber Polyisocyanaten reaktiven Amino-Gruppen. Als geeignete Polyamine können beispielsweise Adipinsäuredihydrazid, Ethylendiamin, Diethylentriamin, Triethylentetramin, Tetraethylenpentamin, Pentaethylenhexamin, Dipropylentriamin, Hexamethylendiamin, Hydrazin, Isophorondiamin, N-(2-Aminoethyl)-2-aminoethanol, Jeffamine^{®} (Polyoxyalkylenamine) der Fa. Huntsman Corporation, Addukte aus Salzen der 2-Acrylamido-2-methylpropan-1-sulfonsäure (AMPS) und Ethylendiamin, Addukte aus Salzen der (Meth)acrylsäure und Ethylendiamin, Addukte aus 1,3-Propansulfon und Ethylendiamin oder beliebige Kombination dieser Polyamine eingesetzt werden. Bevorzugt werden difunktionelle primäre Amine und insbesondere Ethylendiamin eingesetzt.

Die Kettenverlängerungs-Komponente (G) wird in einer solchen Menge zugegeben, daß der Kettenverlängerungs-Grad bezogen auf die freien Isocyanat-Gruppen des Polyurethan-Prepolymers bei 50 bis 100 Equivalent-%, vorzugsweise bei 70 bis 80 Equivalent-%, liegt. Die Kettenverlängerungs-Komponente (G) kann in vorab entnommenen Anteilen des Wassers im Gewichtsverhältnis 1 : 1 bis 1 : 10 verdünnt werden, um die zusätzliche Exothermie durch die Hydratisierung der Amine zurückzudrängen.

Die Kettenstoppungs-Komponente (H) besteht aus einem Monoamin mit einer gegenüber Polyisocyanaten reaktiven Amino-Gruppe. Als geeignete Monoamine können Ethylamin, Diethylamin, n-Propylamin, Di-n-propylamin, Isopropylamin, Diisopropylamin, n-Butylamin, Di-n-butylamin, Ethanolamin, Diethanolamin, Isopropanolamin, Diisopropanolamin, Morpholin, Piperidin, Pyrrolidin oder beliebige Kombination dieser Monoamine eingesetzt werden. Bevorzugt werden monofunktionelle primäre Amine und insbesondere Isopropylamin eingesetzt.

Die Kettenstoppungs-Komponente (H) wird in einer solchen Menge zugegeben, daß der Kettenstoppungs-Grad bezogen auf die freien Isocyanat-Gruppen des Polyurethan-Prepolymers bei 0 bis 50 Equivalent-%, vorzugsweise bei 20 bis 30 Equivalent-%, liegt. Die Kettenstoppungs-Komponente (H) kann in vorab entnommenen Anteilen des Wassers im Gewichtsverhältnis 1 : 1 bis 1 : 10 verdünnt werden, um die zusätzliche Exothermie durch die Hydratisierung der Amine zurückzudrängen.

Die Kettenverlängerung und die Kettenstoppung der Polyurethan-Prepolymer-Dispersion führt zum Aufbau der Molekularmasse innerhalb der Micellen und zur Bildung einer Polyurethan-Polyharnstoff-Dispersion hoher Molekularmasse. Die Kettenverlängerungs-Komponente (G) und die Kettenstoppungs-Komponente (H) reagieren dabei mit reaktiven Isocyanat-Gruppen wesentlich rascher als Wasser.

Im Anschluß an die Reaktions-Stufe b₆) werden evtl. noch vorhandene freie Isocyanat-Gruppen mit Wasser vollständig kettenverlängert.

Der Gehalt an Ethylenoxid-Gruppen im Polyurethan-Polymer aus den Komponenten (A), (B), (C), (E), (G) und (H) wird auf 0,5 bis 10 Gew.-% vorzugsweise auf 2 bis 5 Gew.-% eingestellt.

Der Festkörper-Gehalt an Polyurethan-Polymer bestehend aus den Komponenten (A), (B), (C), (E), (G) und (H) wird auf 30 bis 70 Gew.-%, vorzugsweise auf 50 bis 55 Gew.-%, bezogen auf die Gesamtmenge der Polyurethan-Dispersion eingestellt.

Der Gehalt an Carboxylat- und/oder Sulfonat-Gruppen im Polyurethan-Polymer aus den Komponenten (A), (B), (C), (E), (G) und (H) wird auf 5 bis 25 meq·(100 g)⁻¹, vorzugsweise auf 10 bis 20 meq·(100 g)⁻¹, und die Säurezahl auf 5 bis 30 meq KOH·g⁻¹, vorzugsweise 10 bis 25 meq KOH·g⁻¹, eingestellt.

Die mittlere Partikelgröße (AF-FFF) der Mizellen der Polyurethan-Dispersion beträgt 50 bis 500 nm, vorzugsweise 100 bis 400 nm.

Die mittlere Molmasse (Zahlenmittel) der Polyurethan-Polymere aus den Komponenten (A), (B), (C), (E), (G) und (H) beträgt 25 000 bis 500 000 Dalton.

In einer besonders bevorzugten Ausführungsform wird die Polyurethan-Dispersion mit Hilfe des *High Solids Zero VOC Process* hergestellt (vgl. WO 99/50 325 und DE 199 49 971). Dieses Verfahren stellt eine universelle Methode zur Herstellung von maßgeschneiderten Polyurethan-Dispersionen dar. Die geringen technischen Anforderungen des Verfahrens und der völlige Verzicht auf flüchtige und/oder nichtflüchtige organische Lösemittel ermöglichen hohe Raum/Zeit-Ausbeuten bei niedrigen Kosten. Die Performance der erfindungsgemäßen Polyurethan-Dispersionen hinsichtlich Lösemittel-Freiheit, Festkörper-Gehalt, und Material-Eigenschaften sind bemerkenswert. Hervorzuheben sind außerdem die Einfachheit und Reproduzierbarkeit des Verfahrens sowie die Lagerstabilität der Produkte. Bedingt durch die ideal linear segmentierte Struktur der Polyurethan-Polymeren resultiert intermolekular eine sehr ausgeprägte und regelmäßige Domänen-Struktur aus Hartsegmenten und Weichsegmenten. Hartsegmente bestehen aus Strukturelementen mit starren Urethan- und HarnstoffGruppen sowie kurzkettigen Diolen, die eine starke interchenare Wechselwirkung ausüben. Weichsegmente bestehen aus flexiblen Struktur-Elementen mit Carbonat-, Ester- und Ether-Gruppen, die eine schwache interchenare Wechselwirkung ausüben. Die Polyurethan-Dispersionen weisen aufgrund ihres Herstellverfahrens eine ideal linear segmentierte Struktur auf. Der Ausdruck "ideal linear segmentierte Struktur" kennzeichnet hierbei, dass die Polyurethan-Polymere einen linearen Aufbau besitzen und alle Aufbau-Komponenten in regelmäßiger Anordnung und Sequenz enthalten, woraus die besonderen Material-Eigenschaften der Polyurethan-Dispersionen resultieren. Dehnung und Zugfestigkeit können über weite Bereiche nahezu beliebig variiert werden.

Ein weiterer Gegenstand der vorliegenden Erfindung betrifft die Verwendung von elektrosterisch stabilisierten wässrigen Polyurethan-Harzen in bauchemischen Produkten.

Die erfindungsgemäß vorgeschlagenen elektrosterisch stabilisierten wässrigen Polyurethan-Harze eignen sich als Bindemittel in flüssigen und pastösen Bauprodukten in Form von
(a) Kunstharzputzen,
(b) Bitumenmassen und Asphalt sowie
(c) Einzelkomponenten von Wärmedämmverbundsystemen, ggf. unter Zusatz von mineralischen Bindemitteln.

Die erfindungsgemäß vorgeschlagenen elektrosterisch stabilisierten wässrigen Polyurethan-Harze eignen sich daneben als Vergütungskomponente von mineralischen Bauprodukten in Form von
(a) Mörtelzusatzdispersionen für Estriche, Bodenspachtel- und Verlaufsmassen,
(b) Mörtelzusatzdispersionen für Bau-, Fliesen- und WDVS-Kleber,
(c) Dispersionen als Mörtelzusatz für 2K-Dichtungsschlämme,
(d) Mörtelzusatzdispersionen für Betonreparatursysteme sowie
(e) Polymerdispersionen als Zusatzstoff im Betonbau.

Die erfindungsgemäß vorgeschlagenen elektrosterisch stabilisierten wässrigen Polyurethan-Harze eignen sich ebenfalls als Bindemittel in - ggf. mineralische Bindemittel enthaltenden - Formulierungen für Sportbodenbeläge und Tennisplatzbeläge in Form von
(a) Bindemitteln für Elastikschichten, bestehend aus Gummigranulaten oder Fasern sowie ggf. Zuschlagstoffen,
(b) Haftvermittlern oder Grundierungen für die Untergründe von Sportbodenbelägen,
(c) Spritzbeschichtungen, ggf. mit Struktur-Füllstoffen, zur Aufbringung auf elastische oder starre Untergründe,
(d) Verlaufsbeschichtungen zur Aufbringung auf elastische oder starre Untergründe,
(e) Spachtelmassen für den Porenverschluß von elastischen oder starren Untergründen,
(f) Klebstoffen zur Verklebung von vorgefertigten Elastikschichten,
(g) Versiegelungen, ggf. mit Pigmenten, sowie
(h) Linierungsfarben.

Die erfindungsgemäß vorgeschlagenen elektrosterisch stabilisierten wässrigen Polyurethan-Harze eignen sich weiterhin als Bindemittel in - ggf. mineralische Bindemittel enthaltenden Formulierungen für rissüberbrückende Beschichtungssysteme in Form von
a) Grund-, Schwimm- oder Deckschichten sowie Spritzbeschichtungen oder Versiegelungen auf vorzugsweise grundierten Bauwerksoberflächen,
b) (ggf. flammgeschützten) Dach-Beschichtungen oder -Anstrichen, sowie
c) (ggf. flammgeschützten) Abdichtungen von Bauwerken im Tage- oder Untertagebau.

Bei den genannten Anwendungen sind die erfindungsgemäß vorgeschlagenen elektrosterisch stabilisierten wässrigen Polyurethan-Harze insbesondere als Bindemittel zur Herstellung von ggf. zementbasierenden wässrigen Dickbeschichtungen geeignet.

Die erfindungsgemäß vorgeschlagenen elektrosterisch stabilisierten wässrigen Polyurethan-Harze können im Baubereich außerdem als Bindemittel für Beschichtungen, Dichtstoffe, Druckfarben, Farben und Lacke, Grundierungen, Klebstoffe, Membranen für die Oberflächen von mineralischen Baustoffen, wie z.B. Beton, Gips, Keramik, Ton, Zement, sowie für die Oberflächen von Glas, Gummi, Holz und Holzwerkstoffen, Kunststoff, Metall, Papier, Verbundwerkstoffen eingesetzt werden.

Darüber hinaus eignen sich die erfindungsgemäßen vorgeschlagenen elektrosterisch stabilisierten wässrigen Polyurethan-Harze als Bindemittel für die Beschichtung von echten und synthetischen Ledern sowie Papier und Kartonagen und für die Herstellung von synthetischen Ledern.

Die erfindungsgemäß vorgeschlagenen elektrosterisch stabilisierten wässrigen Polyurethan-Harze können in ein-, zwei- oder mehrkomponentiger Form zum Einsatz kommen, wobei die weiteren Komponenten Formulierungsbestandteile und/oder Härter enthalten können. Hierbei können die erfindungsgemäßen Polyurethan-Harze in Kombination mit Formulierungsbestandteilen und ggf. weiteren Polymeren in Form von redispergierbaren Dispersionspulvern oder als Bindemittel in Mengen von 0,5 bis 75 Gew.-% bezogen auf das fertig formulierte Endprodukt eingesetzt werden.

Es ist prinzipiell auch möglich, innerhalb von Formulierungen die erfindungsgemäßen elektrosterisch stabilisierten wässrigen Polyurethan-Harze mit wässrigen oder nichtwässrigen Bindemitteln und/oder Formulierungen auf Basis der erfindungsgemäßen Polyurethan-Harze mit Formulierungen auf Basis von wässrigen oder nichtwässrigen Bindemitteln zu kombinieren. Der Begriff wässrige oder nichtwässrige Bindemittel kennzeichnet dabei wasserbasierende Polyurethane, Polymer-Dispersionen, redispergierbare PolymerPulver oder nichtwässrige lösemittelhaltige oder lösemittelfreie und ggf. reaktive Polymere.

Bei den einzelnen Formulierungsbestandteilen handelt es sich Füllstoffe, Pigmente, Weichmacher, Fasermaterialien, Entschäumer, Entlüfter, Gleit-und Verlaufadditive, Dispergieradditive, Substratnetzadditive, Hydrophobierungsmittel, Rheologiehilfsmittel, Haftvermittler, Flammschutzmittel, Frostschutzmittel, Antioxidantien, UV-Stabilisatoren und Konservierungsmittel.

Die Formulierungs-Bestandteile können während und/oder nach der Herstellung der Polyurethan-Dispersionen eingebracht werden. Im Falle einer *in-situ* formulierten Polyurethan-Dispersion wird die Formulierung in das Herstellungsverfahren des Bindemittels integriert, d.h. die (inerten) Formulierungs-Bestandteile werden bereits ganz oder teilweise im Dispergiermedium vorgelegt.

Die Applikation der erfindungsgemäßen vorgeschlagenen elektrosterisch stabilisierten wässrigen Polyurethan-Harze erfolgt mit den bekannten Methoden, wie z.B. Fluten, Gießen, Rakeln, Spritzen, Streichen, Tauchen, Walzen.

Die nachfolgenden Beispiele sollen die Erfindung näher veranschaulichen.

### Beispiele

### Beispiel A.1

### A.1.1 Methyl-poly-(ethylenoxid-co/ran-propylenoxid):

102,2 g (1 mol) Methyldiglykol und 7,0 g (0,1 Mol) Kaliummethanolat wurden in einen Reaktor gegeben. Nach sorgfältiger Spülung mit Reinststickstoff wurde auf 115 °C aufgeheizt und ein Gemisch aus 437 g (9,93 Mol) Ethylenoxid und 173 g (2,98 Mol) Propylenoxid innerhalb von 20 Minuten zugegeben. Nach einer Nachreaktionszeit bis zur Druckkonstanz wurde nochmals ein Gemisch von 437 g (9,93 Mol) Ethylenoxid und 173 g (2,98 Mol) Propylenoxid innerhalb von 20 Minuten zudosiert. Nach vollständiger Einleitung des Monomergemischs wurde die Temperatur so lange auf 115 ° C gehalten, bis ein konstanter Manometerdruck das Ende der Nachreaktion anzeigte. Schließlich wurden bei 80 bis 90 °C die nicht umgesetzten Restmonomere im Vakuum entfernt. Das erhaltene Produkt wurde mit Hilfe von Phosphorsäure neutralisiert und das Wasser durch Destillation, das entstandene Kaliumphosphat durch Filtration zusammen mit einem Filterhilfsmittel entfernt.

Das Molekulargewicht aus der Bestimmung der Hydroxylzahl bei einer angenommenen Funktionalität von 1 betrug M = 1140 g/mol.

### A.1.2 Building Block Synthese ("Dispersing Diol"):

In einem Vierhalskolben ausgerüstet mit KPG-Rührer, Rückflußkühler, Innenthermometer und Stickstoff-Deckung wurden 0,1 mol reines 2,4-Toluylendiisocyanat (TDI) (Desmodur T 100, Bayer AG) unter Stickstoff vorgelegt und auf ca. 15-20 °C abgekühlt. Ein Auskristallisieren von 2,4-Toluylendiisocyanat (TDI) sollte dabei unbedingt vermieden werden. Nach Zugabe von 2 Tropfen Dibutylzinndilaureat (DBTL) als Katalysator wurden unter Kühlung innerhalb von ca. 2 Stunden eine äquimolare Menge Methyl-poly(ethylenoxid-*co*/*ran*-propylenoxid) langsam zugetropft. Nach Beendigung des Zutropfens wurde der Ansatz zwei weitere Stunden bei gleicher Temperatur nachgerührt bis der gewünschte NCO-Wert erreicht wurde. Das Preaddukt wurde anschließend unter Kühlung zu einer äquimolaren Menge Diethanolamin (DEA) langsam zugetropft.
Die Reaktion ist beendet, wenn der NCO-Wert auf Null gesunken ist.

### Beispiel A.2

Die Herstellung erfolgte in Analogie zu Beispiel A.1.2. Als hydrophiles Alkylpolyalkylenglykol wurde Natriumsulfonatopropyl -poly-(ethylenoxid-*co*/*ran*propylenoxid) (Tego Chemie Service GmbH) mit einem Molekulargewicht von
M = 1275 g/mol eingesetzt.

### Beispiel B.1

### Lösemittelfreie elektrosterisch stabilisierte Polyurethan-Dispersion auf Basis PPG 2000 und Building Block ("Dispersing Diol") aus Beispiel A.1

In einem Vierhalskolben ausgerüstet mit KPG-Rührer, Rückflußkühler, Thermometer und Stickstoff-Deckung wird zunächst ein Gemisch aus 9,02 g Building Block (aus Beispiel A1) und 41,52 g Isophorondiisocyanat (Vestanat^{®} IPDI, Degussa AG) unter Stickstoff-Deckung ca. 30 Minuten bei 45 °C in Gegenwart von 0.1 g Dibutylzinndilaureat (DBTL) als Katalysator gerührt. Nach Zugabe von 100,00 g eines Polypropylenglykols mit einer Hydroxyl-Zahl von 56,1 mg KOH·g⁻¹ (Arco Arcol PPG 2000 der Fa. Arco Chemical) und 0,58 g 1,4-Butandiol zu dem Preaddukt wird die Mischung unter Stickstoff-Deckung bei 80 - 90 °C weitere 1,5 h gerührt. Anschließend werden 4,11 g fein gemahlene Dimethylolpropionsäure (Handelsname DMPA^{®} der Fa. Mallinckrodt) zugegeben und die Mischung weitere 2,5 h bei unveränderter Temperatur gerührt, bis der berechnete NCO-Gehalt erreicht wird (Theorie: 5,06 Gew.-%, NCO/OH = 2,00). Der Verlauf der Reaktion wird acidimetrisch verfolgt.
Nach dem Abkühlen auf 70°C wird das Prepolymer dann unter intensivem Rühren in 130,59 g Wasser dispergiert, das zuvor mit 21,44 g (70 Equivalent-% Neutralisation) wässriger Natriumhydroxid-Lösung (4 Gewichts-%ig) versetzt wurde und ca. 15 Minuten nachgerührt. Anschließend wird zum Aufbau der Polyurethan-Dispersion mit 18,83 g (70 Equivalent-%) einer 80 Gewichts%igen Lösung von Jeffamin^{®} D-230 (der Fa. Huntsman) in Wassser kettenverlängert.
Es wird eine stabile Polyurethan-Dispersion mit folgender Charakteristik erhalten:

| Aussehen | milchig-weiß |
|---|---|
| Feststoff-Gehalt | 52,5 Gew.-% |
| Ladungsdichte | 18,0 meq·(100 g)⁻¹ |
| EO-Gehalt im Prepolymer | 3,5 Gew.-% |
| pH | 6,8 |
| Viskosität - Brookfield | 170 mPa·s (20°C) |
| Mittlerer Partikeldurchmesser | 120-160 nm |

### Beispiel B.2

### Lösemittelfreie elektrosterisch stabilisierte Polvurethan-Dispersion auf Basis eines hydrophobierten Polyalkylenoxides (Poly-(propylenoxid)-block-poly-(butylenoxid)-block-poly-(propylenoxid und Building Block ("Dispersing Diol") aus Beispiel A.1

Die Herstellung erfolgte in Analogie zu Beispiel B.1, nur dass anstelle des Polypropylenglykols, ein hydrophobiertes Polypropylenglykol mit ) mit 42 Gew.-% eines Polybutylenoxid-Mittelblocks und einer Hydroxyl-Zahl von 53,1 mg KOH·g⁻¹ (Fa. Tego Chemie Service GmbH) verwendet wird.

| Aussehen | milchig-weiß |
|---|---|
| Feststoff-Gehalt | 52,5 Gew.-% |
| Ladungsdichte | 18,2 meq·(100 g)⁻¹ |
| EO-Gehalt im Prepolymer | 3,5 Gew.-% |
| pH | 6,8 |
| Viskosität - Brookfield | 175 mPa·s (20°C) |
| Mittlerer Partikeldurchmesser | 120-160 nm |

### Beispiel B.3

### Lösemittelfreie elektrosterisch stabilisierte Polyurethan-Dispersion auf Basis PPG 2000 und Building Block ("Dispersing Diol") aus Beispiel A.2

In einem Vierhalskolben ausgerüstet mit KPG-Rührer, Rückflußkühler, Thermometer und Stickstoff-Deckung wird zunächst ein Gemisch aus 10,18 g Building Block (aus Beispiel A.2) und 37,77 g Isophorondiisocyanat (Vestanat^{®} IPDI, Degussa AG) unter Stickstoff-Deckung ca. 30 Minuten bei 45 °C in Gegenwart von 0.1 g Dibutylzinndilaureat (DBTL) als Katalysator gerührt. Nach Zugabe von 100,00 g eines Polypropylenglykols mit einer Hydroxyl-Zahl von 56,1 mg KOH·g⁻¹ (Arco Arcol PPG 2000 der Fa. Arco Chemical) und 0,58 g 1,4-Butandiol zu dem Preaddukt wird die Mischung unter Stickstoff-Deckung bei 80 - 90 °C weitere 1,5 h gerührt. Anschließend werden 2,98 g fein gemahlene Dimethylolpropionsäure (Handelsname DMPA^{®} der Fa. Mallinckrodt) zugegeben und die Mischung weitere 2,5 h bei unveränderter Temperatur gerührt, bis der berechnete NCO-Gehalt erreicht wird (Theorie: 4,71 Gew.-%, NCO/OH = 2,00). Der Verlauf der Reaktion wird acidimetrisch verfolgt.

Nach dem Abkühlen auf 70 °C wird das Prepolymer dann unter intensivem Rühren in 139,27 g Wasser dispergiert, das zuvor mit 13,42 g (60 Equivalent-% Neutralisation bezogen auf DMPA) wässriger Natriumhydroxid-Lösung (4 Gewichts-%ig) versetzt wurde und ca. 15 Minuten nachgerührt.

Anschließend wird zum Aufbau der Polyurethan-Dispersion mit 7,15 g (70 Equivalent-%) einer 50 Gewichts%igen Lösung von Ethylendiamin in Wassser kettenverlängert.

Es wird eine stabile Polyurethan-Dispersion mit folgender Charakteristik erhalten:

| Aussehen | milchig-weiß |
|---|---|
| Feststoff-Gehalt | 50,0 Gew.-% |
| Ladungsdichte | 18,4 meq·(100 g)⁻¹ |
| EO-Gehalt im Prepolymer | 4,1 Gew.-% |
| pH | 6,9 |
| Viskosität - Brookfield | 190 mPa·s (20°C) |
| Mittlerer Partikeldurch-messer | 140-180 nm |

### Beispiel B.4

### Lösemittelfreie elektrosterisch stabilisierte Polyurethan-Dispersion auf Basis Polytetrahydrofuran (PTHF) und Building Block ("Dispersing Diol") aus Beispiel A.1

Die Herstellung erfolgte in Analogie zu den Beispielen B.1 und B.2, nur dass anstelle des Polypropylenglykols ein Polytetrahydrofurandiol (PTHF) mit einer Hydroxyl-Zahl von 56,1 mg KOH·g⁻¹ (BASF AG) verwendet wird.

| Aussehen | milchig-weiß |
|---|---|
| Feststoff-Gehalt | 50,0 Gew.-% |
| Ladungsdichte | 17,7 meq·(100 g)⁻¹ |
| EO-Gehalt im Prepolymer | 3,5 Gew.-% |
| pH | 6,8 |
| Viskosität - Brookfield | 195 mPa·s (20°C) |
| Mittlerer Partikeldurchmesser | 140-180 nm |

Lösemittelfreie elektrosterisch stabilisierte Polyurethan-Dispersion aus den Beispielen B.1 bis B.4 unter Verwendung der Building Blocks A.1 und A.2 (Gesamtübersicht)

Die Herstellung erfolgte in Analogie zu den Beispielen B.1 bzw. B.3. Eingesetzt wurden jedoch:
Lösemittelfreie elektrosterisch stabilisierte Polyurethan-Dispersion aus den Beispielen B.1 bis B.4 unter Verwendung der Building Blocks A.1 und A.2 (Gesamtübersicht)

Die Herstellung erfolgte in Analogie zu den Beispielen B.1 bzw. B.3. Eingesetzt wurden jedoch:

| Beispiel | B.1 | B.2 | B.3 | B.4 |
|---|---|---|---|---|
| Building Block ("Dispersing Diol") | 9,02 g A.1 | 8,95 g A.1 | 10,18 g A.2 | 8,67 g A.1 |
| Polymeres Diol (jeweils 100 g) | PPG 2000 | Poly-(propylenoxid)-block-poly-(butylenoxid)-*block*-poly-(propylenoxid) | PPG 2000 | PTHF 2000 |
| 1,4-Butandiol | 0,58 g | 0,58 g | 0,58 g | - |
| DMPA^{®} | 4,11 g | 4,11 g | 2,98 g | 3,63 g |
| IPDI | 41,52 g | 40,31 g | 37,77 g | 36,96 g |
| NaOH (4 Gew.-%ig) | 21,45 g (70 % neutr.) | 21.45 g (70 % neutr.) | 13,42 g (60 % neutr.) | 16,24 g (60 % neutr.) |
| EDA (50 Gew.-%ig) | - | - | 7,15 g | 7,00 g |
| Jeffamin D-230 (80 Gew.-%ig) | 18,83 g | 18,26 g | - | - |
| H₂O | 130,59 g | 129,13 g | 139,27 g | 134,42 |
| NCO (Theorie) | 5,06 Gew.-% | 4,95 Gew.-% | 4,71 Gew.-% | 4,68 Gew.-% |
| Charakteristik | milchig-weiße Flüssigkeit | | | |
| Festkörper-Gehalt [Gew.-%] | 52,5 | 52,5 | 50,0 | 50,0 |
| EO-Gehalt im PP [Gew.-%l | 3,5 | 3,5 | 4.1 | 3,5 |
| Ladungsdichte [meq·(100 g)⁻¹] | 18,0 | 18,2 | Gesamt 18,4 | 17,7 |

Eigenschaftsprofil der lösemittelfreien elektrosterisch stabilisierte Polyurethan-Dispersionen aus den Beispielen B.1 bis B.4

| Beispiel | B.1 | B.2 | B.3 | B.4 |
|---|---|---|---|---|
| Zugfestigkeit σ_{M} | 25,1 MPa | 25,8 MPa | 24,6 MPa | 23,0 MPa |
| Dehnung bei der Zugfestigkeit ε_{M} | 786 % | 710 % | 698% | 701% |

Materialeigenschaften nach EN ISO 527

## Patentansprüche

1. Anionisch modifizierte, elektrosterisch stabilisierte wässrige Polyurethan-Dispersion, erhältlich durch
a) die Herstellung eines hydrophilen und lösemittelfreien Makromonomers (A)(ii) mit monomodaler Molekularmassenverteilung, wobei man
a₁) 50 bis 100 Gewichtsteile eines hydrophilen Alkyl- und/oder Arylpolyalkylenglykols (A)(i) mit einer gegenüber Isocyanat-Gruppen reaktiven primären und/oder sekundären und/oder tertiären Hydroxyl-Gruppe und einer Molekularmasse von 250 bis 5000 Dalton mit 1 bis 100 Gewichtsteilen eines Polyisocyanates (B)(i), bestehend aus mindestens einem Diisocyanat, Polyisocyanat, Polyisocyanat-Derivat oder Polyisocyanat-Homologen mit zwei oder mehreren (cyclo)aliphatischen oder aromatischen Isocyanat-Gruppen gleicher oder unterschiedlicher Reaktivität ggf. in Gegenwart eines Katalysators zur Reaktion bringt,
a₂) das Preaddukt aus Stufe a₁) vollständig mit 0,5 bis 200 Gewichtsteilen einer Verbindung (C) mit zwei oder mehreren gegenüber Isocyanat-Gruppen reaktiven primären und/oder sekundären Amino-Gruppen und/oder Hydroxyl-Gruppen und einer Molekularmasse von 50 bis 500 Dalton zur Reaktion bringt, wobei die Reaktionsbedingungen und die Selektivität der Komponente (C) so gewählt werden, dass nur eine reaktive Gruppe der Komponente (C) mit der /den freien Isocyanat-Gruppe(n) des Preaddukts reagiert, sowie
b) durch die Herstellung der Polyurethan-Dispersion, wobei man
b₁) 2 bis 50 Gewichtsteile des hydrophilen und lösemittelfreien Makromonomers (A)(ii) mit monomodaler Molekularmassenverteilung mit zwei oder mehreren gegenüber Isocyanat-Gruppen reaktiven Hydroxyl-Gruppen und einer Molekularmasse von 500 bis 5500 Dalton mit 25 bis 250 Gewichtsteilen einer Polyisocyanat-Komponente (B)(ii), bestehend aus mindestens einem Polyisocyanat, Polyisocyanat-Derivat oder Polyisocyanat-Homologen mit zwei oder mehreren (cyclo)aliphatischen oder aromatischen Isocyanat-Gruppen ggf. unter Zugabe von 0 bis 50 Gewichtsteilen einer Lösemittel-Komponente (D) und ggf. in Gegenwart eines Katalysators umsetzt,
b₂) das Polyurethan-Preaddukt aus Stufe b₁) mit 50 bis 100 Gewichtsteilen eines polymeren Polyols (A)(iii) mit zwei oder mehreren gegenüber Isocyanat-Gruppen reaktiven Hydroxyl-Gruppen und einer Molekularmasse von 500 bis 5000 Dalton
und ggf.
mit 0,5 bis 10 Gewichtsteilen einer niedermolekularen Polyolkomponente (A)(iv) mit 2 oder mehreren Hydroxyl-Gruppen und einem Molekulargewicht von 50 bis 499 Dalton ggf. in Gegenwart eines Katalysators umsetzt,
b₃) das Polyurethan-Preaddukt aus Stufe b₂) mit 2 bis 20 Gewichtsteilen einer niedermolekularen und anionisch modifizierbaren Polyol-Komponente (A)(v)mit einer, zwei oder mehreren gegenüber Isocyanat-Gruppen reaktiven Hydroxyl-Gruppen und einer oder mehreren inerten Carbonsäure-und/oder Sulfonsäure-Gruppe(n), welche mit Hilfe von Basen teilweise oder vollständig in Carboxylat- bzw. Sulfonatgruppen überführt werden können oder bereits in Form von Carboxylat-und/oder Sulfonat-Gruppen vorliegen, und einer Molekularmasse von 100 bis 1000 Dalton ggf. in Gegenwart eines Katalysators umsetzt,
b₄) das Polyurethan-Prepolymer aus Stufe b₃) vor oder während der Dispergierung in Wasser zur teilweisen oder vollständigen Neutralisation der Säure-Gruppen mit 2 bis 20 Gewichtsteilen einer Neutralisations-Komponente (E) versetzt,
b₅) das ggf. (teil-)neutralisierte Polyurethan-Prepolymer aus Stufe b₄) in 50 bis 1500 Gewichtsteilen Wasser, welches ggf. noch 0 bis 100 Gewichtsteile einer Formulierungs-Komponente (F) enthält, dispergiert und schließlich
b₆) die (teil-)neutralisierte Polyurethan-Prepolymer-Dispersion aus Stufe b₅) mit 3 bis 60 Gewichtsteilen einer Kettenverlängerungs-Komponente (G) sowie anschließend oder gleichzeitig mit 0 bis 30 Gewichtsteilen einer Kettenstoppungs-Komponente (H) umsetzt.

2. Polyurethan-Dispersion nach Anspruch 1, **dadurch gekennzeichnet, dass** es sich bei der Komponente (A)(i) um Copolymere und/oder statistische Copolymere und/oder Blockcopolymere, zusamengesetzt aus 90 bis 10 Gew.-% Ethylenoxid und 10 bis 90 Gew.-% weiteren Alkylenoxiden mit 4 bis 30 Kohlenstoffatomen pro Alkylenoxid, mit einer primären primären und/oder sekundären und/oder tertiären Hydroxyl-Gruppe handelt.

3. Polyurethan-Dispersion nach Anspruch 1 oder 2, **dadurch gekennzeichnet, dass** es sich bei der Komponente (A)(i) um ein monofunktionelles Alkyl-poly-(ethylenoxid-*co*/*ran*-alkylenoxid) und/oder Alkyl-poly-(ethylenoxid-*block*-alkylenoxid) und/oder Natriumsulfonatopropyl-poly-(ethylenoxid-*co*/*ran*-alkylenoxid) und/oder Natriumsulfonatopropyl-poly-(ethylenoxid-*block*-alkylenoxid) mit einer primären und/oder sekundären und/oder tertiären Hydroxyl-Gruppe, zusammengesetzt aus 90 bis 10 Gew.-% Ethylenoxid und 10 bis 90 Gew.-% eines weiteren Alkylenoxids, handelt.

4. Polyurethan-Dispersion nach einem der Ansprüche 1 bis 3, **dadurch gekennzeichnet, dass** es sich bei dem Alkylenoxid um Propylenoxid, Butylenoxid, Dodecyloxid, Isoamyloxid, Oxetan, substituierte Oxetane, α-Pinenoxid, Styroloxid, Tetrahydrofuran oder weitere aliphatische oder aromatische Alkylenoxide mit 4 bis 30 Kohlenstoffatomen pro Alkylenoxid handelt.

5. Polyurethan-Dispersion nach einem der Ansprüche 1 bis 4, **dadurch gekennzeichnet, dass** es sich bei der Komponente (A)(i) um monofunktionelle Polyalkylenglykole und bei der Komponente (B)(i) um ein mindestens funktionelles Polyisocyanat handelt.

6. Polyurethan-Dispersion nach einem der Ansprüche 1 bis 5, **dadurch gekennzeichnet, dass** es sich bei der Komponente (B)(i) um 2,4-Toluendiisocyanat, Isomerengemische aus 2,4- Toluendiisocyanat und 2,6-Toluendiisocyanat oder Isomerengemische aus Isophorondiisocyanat handelt.

7. Polyurethan-Dispersion nach einem der Ansprüche 1 bis 6, **dadurch gekennzeichnet, dass** es sich bei der Komponente (C) um Diethanolamin handelt.

8. Polyurethan-Dispersion nach einem der Ansprüche 1 bis 7, **dadurch gekennzeichnet, dass** als Komponente (A)(iii) lineare bzw. difunktionelle Polyalkylenglykole mit einer Molekularmasse von 500 bis 5000 Dalton eingesetzt werden.

9. Polyurethan-Dispersion nach einem der Ansprüche 1 bis 8, **dadurch gekennzeichnet, dass** es sich bei der Komponente (A)(iii) um Polypropylenglykole und/oder hydrophob modifizierte Blockcopolymere mit ABA-, BAB- oder (AB)ₙ-Struktur handelt, wobei A ein Polymer-Segment mit hydrophobierenden Eigenschaften und B ein Polymer-Segment auf Basis Polypropylenoxid repräsentiert.

10. Polyurethan-Dispersion nach Anspruch 9, **dadurch gekennzeichnet, dass** das Polymer-Segment A aus Polybutylenoxid, Polydodecyloxid, Polyisoamyloxid, Polyoxetan, substituiertem Polyoxetan, Poly-α-pinenoxid, Polystyroloxid, Polytetramethylenoxid, weiteren aliphatischen oder aromatischen Polyoxyalkylenen mit 4 bis 30 Kohlenstoffatomen pro Alkylenoxid, α,ω-Polymethacrylatdiolen, α,ω-Dihydroxyalkylpoly-dimethylsiloxanen, Makromonomeren, Telechelen oder Gemischen daraus besteht.

11. Polyurethan-Dispersion nach einem der Ansprüche 1 bis 10, **dadurch gekennzeichnet, dass** es sich bei der Komponente (A)(v) um eine Bishydroxyalkancarbonsäure handelt.

12. Polyurethan-Dispersion nach Anspruch 11, **dadurch gekennzeichnet, dass** als Bishydroxyalkancarbonsäure Dimethylolpropionsäure eingesetzt wird.

13. Polyurethan-Dispersion nach einem der Ansprüche 1 bis 12, **dadurch gekennzeichnet, dass** das NCO/OH-Equivalentverhältnis in Stufe a₁) auf 1,9 bis 2,1 und das NCO/OH+NH-Equivalentverhältnis in Stufe a₂) auf 0,95 bis 1,05 eingestellt wird.

14. Polyurethan-Dispersion nach einem der Ansprüche 1 bis 13, **dadurch gekennzeichnet, dass** das NCO/OH-Equivalent-Verhältnis der Komponenten (A)(i), (A)(ii), (A)(iii), (A)(iv), (A)(v) und (B)(ii) in Stufe b) auf einen Wert von 1,25 bis 2,5, vorzugsweise 1,4 bis 2,0, eingestellt wird.

15. Polyurethan-Dispersion nach einem der Ansprüche 1 bis 14, **dadurch gekennzeichnet, dass** die Neutralisations-Komponente (E) in einer solchen Menge zugegeben wird, dass der Neutralisations-Grad bezogen auf die freien Carbonsäure- und/oder Sulfonsäure-Gruppen des Polyurethan-Prepolymers bei 25 bis 100 Equivalent-%, vorzugsweise 50 bis 100 Equivalent-%, liegt.

16. Polyurethan-Dispersion nach einem der Ansprüche 1 bis 15, **dadurch gekennzeichnet, dass** die Kettenverlängerungs-Komponente (G) in einer solchen Menge eingesetzt wird, dass der Kettenverlängerungs-Grad bezogen auf die freien Isocyanat-Gruppen des Polyurethan-Prepolymers bei 50 bis 100 Equivalent-%, vorzugsweise bei 70 bis 80 Equivalent-%, liegt.

17. Polyurethan-Dispersion nach einem der Ansprüche 1 bis 16, **dadurch gekennzeichnet, dass** die Kettenstopper-Komponente (H) in einer solchen Menge eingesetzt wird, dass der Kettenstoppungs-Grad bezogen auf die freien Isocyanat-Gruppen des Polyurethan-Prepolymers bei 0 bis 50 Equivalent-%, vorzugsweise bei 20 bis 30 Equivalent-%, liegt.

18. Polyurethan-Dispersion nach einem der Ansprüche 1 bis 17, **dadurch gekennzeichnet, dass** im Polyurethan-Polymer aus den Komponenten (A), (B), (C), (E), (G) und (H) der Gehalt an Ethylenoxid-Gruppen bei 0,5 bis 10 Gew.-% vorzugsweise bei 2 bis 5 Gew.-% liegt.

19. Polyurethan-Dispersion nach einem der Ansprüche 1 bis 18, **dadurch gekennzeichnet, dass** im Polyurethan-Polymer aus den Komponenten (A), (B), (C), (E), (G) und (H) der Gehalt an Carboxylat- und/oder Sulfonat-Gruppen auf 5 bis 25 meq_{·}(100 g)⁻¹, vorzugsweise auf 10 bis 20 meq·(100 g)⁻¹, und die Säurezahl auf 5 bis 30 meq KOH·g⁻¹, vorzugsweise auf 10 bis 25 meq KOH·g⁻¹, eingestellt wird.

20. Polyurethan-Dispersion nach einem der Ansprüche 1 bis 19, **dadurch gekennzeichnet, dass** der Festkörper-Gehalt an Polyurethan-Polymer bestehend aus den Komponenten (A), (B), (C), (E), (G) und (H) auf 30 bis 70 Gew.-%, vorzugsweise 50 bis 55 Gew.-%, bezogen auf die Gesamtmenge der Polyurethan-Dispersion eingestellt wird.

21. Polyurethan-Dispersion nach einem der Ansprüche 1 bis 20, **dadurch gekennzeichnet, dass** die mittlere Partikelgröße der Mizellen 50 bis 500 nm, vorzugsweise 100 bis 400 nm, beträgt.

22. Polyurethan-Dispersion nach einem der Ansprüche 1 bis 21, **dadurch gekennzeichnet, dass** die mittlere Molmasse (Zahlenmittel) 25 000 bis 500 000 Dalton beträgt.

23. Verfahren zur Herstellung einer anionisch modifizierten, elektrosterisch stabilisierten Polyurethan-Dispersion nach einem der Ansprüche 1 bis 22, **dadurch gekennzeichnet, dass** man
a) ein hydrophiles und lösemittelfreies Makromonomer (A)(ii) mit monomodaler Molekularmassenverteilung **dadurch** herstellt, dass man
a₁) 50 bis 100 Gewichtsteile eines hydrophilen Alkyl- oder Arylpolyalkylenglykols (A)(i) mit 1 bis 100 Gewichtsteilen einer Polyisocyanat-Komponente (B)(i) ggf. in Gegenwart eines Katalysators in Abwesenheit von Lösemitteln zur Reaktion bringt, wobei die Reaktionsbedingungen und die Selektivitäten der Komponenten (A)(i) und (B)(i) so gewählt werden, dass nur eine Isocyanat-Gruppe der Komponente (B)(i) mit der Komponente (A)(i) reagiert, und anschließend
a₂) das einheitliche Preaddukt aus Stufe a₁) vollständig mit 0,5 bis 200 Gewichtsteilen einer Verbindung (C) in Abwesenheit von Lösemitteln zur Reaktion bringt, wobei die Reaktionsbedingungen und die Selektivität der Komponente (C) so gewählt werden, dass nur eine reaktive Gruppe der Komponente (C) mit der/den freien Isocyanat Gruppe(n) des Preaddukts reagiert,
b) die Polyurethan-Dispersion **dadurch** herstellt, dass man
b₁) 2 bis 50 Gewichtsteile des hydrophilen und lösemittelfreien Makromonomers (A)(ii) mit 25 bis 250 Gewichtsteilen der Polyisocyanat-Komponente (B)(i) ggf. in Gegenwart von 0 bis 50 Gewichtsteilen einer Lösemittel-Komponente (D) sowie eines Katalysators umsetzt,
b₂) das Polyurethan-Preaddukt aus Stufe b₁) mit 50 bis 100 Gewichtsteilen eines polymeren Polyols (A)(iii) und ggf. mit 0,5 bis 10 Gewichtsteilen einer niedermolekularen Polyol-komponente (A)(iv) ggf. in Gegenwart eines Katalysators zur Reaktion bringt,
b₃) das homogene Polyurethan-Preaddukt aus Stufe b₂) mit 2 bis 20 Gewichtsteilen einer Polyol-Komponente (A)(v) ggf. in Gegenwart eines Katalysators umsetzt,
b₄) das homogene Polyurethan-Prepolymer aus Stufe b₃) vor oder während der Dispergierung in 50 bis 1 500 Gewichtsteilen Wasser mit 2 bis 20 Gewichtsteilen einer Neutralisations-Komponente (E) versetzt,
b₅) das ggf. (teil-)neutralisierte Polyurethan-Prepolymer aus Stufe b₄) in 50 bis 1 500 Gewichtsteilen Wasser, welches ggf. noch 0 bis 100 Gewichtsteile einer Formulierungs-Komponente (F) enthält, dispergiert und schließlich
be) die (teil-)neutralisierte Polyurethan-Prepolymer-Dispersion aus Stufe b₅) mit 3 bis 60 Gewichtsteilen einer Kettenverlängerungs-Komponente (G) sowie anschließend oder gleichzeitig mit 0 bis 30 Gewichtsteilen einer Kettenstoppungs-Komponente (H) umsetzt.

24. Verfahren nach Anspruch 23, **dadurch gekennzeichnet, dass** in der Reaktionsstufe a₁) die Komponente (B)(i) zur Komponente (A)(i) oder die Komponente (A)(i) zur Komponente (B)(i) zudosiert wird.

25. Verfahren nach Anspruch 23, **dadurch gekennzeichnet, dass** die Reaktionsstufen a₁) und a₂) bei einer Temperatur von 10 bis 30 °C durchgeführt werden.

26. Verfahren nach einem der Ansprüche 23 bis 25, **dadurch gekennzeichnet, dass** die Reaktionsstufen b₁), b₂) und b₃) bei einer Temperatur von 60 bis 120 °C, vorzugsweise von 80 bis 100 °C, durchgeführt werden.

27. Verfahren nach einem der Ansprüche 23 bis 26, **dadurch gekennzeichnet, dass** die Reaktionsstufen b₄) und b₅) bei einer Temperatur von 40 bis 60 °C durchgeführt werden.

28. Verfahren nach einem der Ansprüche 23 bis 27, **dadurch gekennzeichnet, dass** die Reaktionsstufe b₆) bei 30 bis 50 °C durchgeführt wird.

29. Verfahren nach einem der Ansprüche 23 bis 28, **dadurch gekennzeichnet, dass** im Anschluss an die Reaktionsstufe b₆) evtl. noch vorhandene freie NCO-Gruppen mit Wasser vollständig kettenverlängert werden.

30. Verwendung der Polyurethan-Dispersion nach einem der Ansprüche 1 bis 22 als Bindemittel in flüssigen und pastösen Bauprodukten in Form von
(a) Kunstharzputzen,
(b) Bitumenmassen und Asphalt sowie
(c) Einzelkomponenten von Wärmedämmverbundsystemen, ggf. unter Zusatz von mineralischen Bindemitteln.

31. Verwendung der Polyurethan-Dispersion nach einem der Ansprüche 1 bis 22 als Vergütungskomponente von mineralischen Bauprodukten in Form von
(a) Mörtelzusatzdispersionen für Estriche, Bodenspachtel- und Verlaufsmassen,
(b) Mörtelzusatzdispersionen für Bau-, Fliesen- und WDVS-Kleber,
(c) Dispersionen als Mörtelzusatz für 2K-Dichtungsschlämme,
(d) Mörtelzusatzdispersionen für Betonreparatursysteme sowie
(e) Polymerdispersionen als Zusatzstoff im Betonbau.

32. Verwendung der Polyurethan-Dispersion nach einem der Ansprüche 1 bis 21 als Bindemittel in - ggf. mineralische Bindemittel enthaltenden - Formulierungen für Sportbodenbeläge und Tennisplatzbeläge in Form von
(a) Bindemitteln für Elastikschichten, bestehend aus Gummigranulaten oder Fasern sowie ggf. Zuschlagstoffen,
(b) Haftvermittlern oder Grundierungen für die Untergründe von Sportbodenbelägen,
(c) Spritzbeschichtungen, ggf. mit Struktur-Füllstoffen, zur Aufbringung auf elastische oder starre Untergründe,
(d) Verlaufsbeschichtungen zur Aufbringung auf elastische oder starre Untergründe.
(e) Spachtelmassen für den Porenverschluß von elastischen oder starren Untergründen,
(f) Klebstoffen zur Verklebung von vorgefertigten Elastikschichten,
(g) Versiegelungen, ggf. mit Pigmenten, sowie
(h) Linierungsfarben.

33. Verwendung der Polyurethan-Dispersion nach einem der Ansprüche 1 bis 22 als Bindemittel in - ggf. mineralische Bindemittel enthaltenden - Formulierungen für rissüberbrückende Beschichtungssysteme in Form von
a) Grund-, Schwimm- oder Deckschichten, sowie Spritzbeschichtungen oder Versiegelungen auf vorzugsweise grundierten Bauwerksoberflächen,
b) (ggf. flammgeschützten) Dach-Beschichtungen oder -Anstrichen, sowie
c) (ggf. flammgeschützten) Abdichtungen von Bauwerken im Tage- oder Untertagebau.

34. Verwendung der Polyurethan-Dispersion nach einem der Ansprüche 1 bis 22 als Bindemittel zur Herstellung von ggf. zementbasierenden wässrigen Dickbeschichtungen.

35. Verwendung der Polyurethan-Dispersion nach einem der Ansprüche 1 bis 22 als Bindemittel für Beschichtungen, Dichtstoffe, Druckfarben, Farben und Lacke, Grundierungen, Klebstoffe, Membranen für die Oberflächen von mineralischen Baustoffen, wie z.B. Beton, Gips, Keramik, Ton, Zement, sowie für die Oberflächen von Glas, Gummi, Holz und Holzwerkstoffen, Kunststoff, Metall, Papier, Verbundwerkstoffen.

36. Verwendung der Polyurethan-Dispersion nach einem der Ansprüche 1 bis 22 als Bindemittel für die Beschichtung von echten und synthetischen Ledern sowie Papier und Kartonagen und für die Herstellung von synthetischen Ledern.

37. Verwendung nach einem der Ansprüche 30 bis 36, **dadurch gekennzeichnet, dass** die Polyurethan-Dispersion in ein-, zwei- oder mehrkomponentiger Form eingesetzt wird, wobei die weiteren Komponenten Formulierungsbestandteile und/oder Härter enthalten können.

38. Verwendung nach einem der Ansprüche 30 bis 36, **dadurch gekennzeichnet, dass** die Polyurethan-Dispersion in Kombination mit Formulierungsbestandteilen und ggf. weiteren Polymeren in Form von redispergierbaren Dispersionspulvern eingesetzt wird.

39. Verwendung nach einem der Ansprüche 30 bis 36, **dadurch gekennzeichnet, dass** die Polyurethan-Dispersion als Bindemittel in Mengen von 0,5 bis 75 Gew.-% bezogen auf das fertig formulierte Endprodukt eingesetzt wird.

## Claims

1. Anionically modified, electrosterically stabilized aqueous polyurethane dispersion, obtainable by
a) preparing a hydrophilic and solvent-free macromonomer (A) (ii) with monomodal molecular mass distribution, for which
a₁) 50 to 100 parts by weight of a hydrophilic alkyl- and/or arylpolyalkylene glycol (A)(i) having a primary and/or secondary and/or tertiary hydroxyl group which is reactive toward isocyanate groups and having a molecular mass of 250 to 5000 daltons are reacted with 1 to 100 parts by weight of a polyisocyanate (B)(i), consisting of at least one diisocyanate, polyisocyanate, polyisocyanate derivative or polyisocyanate homolog having two or more (cyclo)aliphatic or aromatic isocyanate groups of identical or different reactivity, optionally in the presence of a catalyst,
a₂) the preadduct from stage a₁) is reacted completely with 0.5 to 200 parts by weight of a compound (C) having two or more primary and/or secondary amino groups and/or hydroxyl groups which are reactive toward isocyanate groups and having a molecular mass of 50 to 500 daltons, the reaction conditions and the selectivity of component (C) being chosen such that only one reactive group of component (C) reacts with the free isocyanate group(s) of the preadduct, and also
b) by preparing the polyurethane dispersion, for which
b₁) 2 to 50 parts by weight of the hydrophilic and solvent-free macromonomer (A) (ii) with monomodal molecular mass distribution, having two or more hydroxyl groups which are reactive toward isocyanate groups and having a molecular mass of 500 to 5500 daltons, are reacted with 25 to 250 parts by weight of a polyisocyanate component (B) (ii) consisting of at least one polyisocyanate, polyisocyanate derivative or polyisocyanate homolog having two or more (cyclo) aliphatic or aromatic isocyanate groups, optionally with the addition of 0 to 50 parts by weight of a solvent component (D) and optionally in the presence of a catalyst,
b₂) the polyurethane preadduct from stage b₁) is reacted with 50 to 100 parts by weight of a polymeric polyol (A)(iii) having two or more hydroxyl groups which are reactive toward isocyanate groups and having a molecular mass of 500 to 5000 daltons
and optionally
with 0.5 to 10 parts by weight of a low molecular mass polyol component (A)(iv) having 2 or more hydroxyl groups and a molecular weight of 50 to 499 daltons, optionally in the presence of a catalyst,
b₃) the polyurethane preadduct from stage b₂) is reacted with 2 to 20 parts by weight of a low molecular mass, anionically modifiable polyol component (A)(v) having one, two or more hydroxyl groups which are reactive toward isocyanate groups and having one or more inert carboxylic acid and/or sulfonic acid groups, which by means of bases can be converted fully or partly into carboxylate and/or sulfonate groups, respectively, or are already in the form of carboxylate and/or sulfonate groups, and having a molecular mass of 100 to 1000 daltons, optionally in the presence of a catalyst,
b₄) the polyurethane prepolymer from stage b₃), before or during dispersion in water, is admixed, for the purpose of full or partial neutralization of the acid groups, with 2 to 20 parts by weight of a neutralizing component (E),
b₅) the optionally (partially) neutralized polyurethane prepolymer from stage b₄) is dispersed in 50 to 1500 parts by weight of water, which optionally further contains 0 to 100 parts by weight of a formulating component (F), and finally
b₆) the (partially) neutralized polyurethane prepolymer dispersion from stage b₅) is reacted with 3 to 60 parts by weight of a chain extender component (G) and also, subsequently or simultaneously, with 0 to 30 parts by weight of a chain stopper component (H).

2. Polyurethane dispersion according to Claim 1, **characterized in that** component (A)(i) comprises copolymers and/or random copolymers and/or block copolymers, composed of 90% to 10% by weight of ethylene oxide and 10% to 90% by weight of further alkylene oxides having 4 to 30 carbon atoms per alkylene oxide with a primary and/or secondary and/or tertiary hydroxyl group.

3. Polyurethane dispersion according to Claim 1 or 2, **characterized in that** component (A)(i) comprises a monofunctional alkylpoly(ethylene oxide-co/ran-alkylene oxide) and/or alkylpoly(ethylene oxide-block-alkylene oxide) and/or sodium sulfonatopropylpoly(ethylene oxide-co/ran-alkylene oxide) and/or sodium sulfonatopropylpoly(ethylene oxide-block-alkylene oxide) having a primary and/or secondary and/or tertiary hydroxyl group, composed of 90% to 10% by weight of ethylene oxide and 10% to 90% by weight of a further alkylene oxide.

4. Polyurethane dispersion according to any one of Claims 1 to 3, **characterized in that** the alkylene oxide comprises propylene oxide, butylene oxide, dodecyl oxide, isoamyl oxide, oxetane, substituted oxetanes, α-pinene oxide, styrene oxide, tetrahydrofuran or further aliphatic or aromatic alkylene oxides having 4 to 30 carbon atoms per alkylene oxide.

5. Polyurethane dispersion according to any one of Claims 1 to 4, **characterized in that** component (A)(i) comprises monofunctional polyalkylene glycols and component (B)(i) comprises an at least functional polyisocyanate.

6. Polyurethane dispersion according to any one of Claims 1 to 5, **characterized in that** component (B)(i) comprises toluene 2,4-diisocyanate, isomer mixtures of toluene 2,4-diisocyanate and toluene 2,6-diisocyanate, or isomer mixtures of isophorone diisocyanate.

7. Polyurethane dispersion according to any one of Claims 1 to 6, **characterized in that** component (C) comprises diethanolamine.

8. Polyurethane dispersion according to any one of Claims 1 to 7, **characterized in that** as component (A) (iii) linear and/or difunctional polyalkylene glycols having a molecular mass of 500 to 5000 daltons are used.

9. Polyurethane dispersion according to any one of Claims 1 to 8, **characterized in that** component (A) (iii) comprises polypropylene glycols and/or hydrophobically modified block copolymers with ABA, BAB or (AB)ₙ structure, A representing a polymer segment having hydrophobizing properties and B a polymer segment based on polypropylene oxide.

10. Polyurethane dispersion according to Claim 9, **characterized in that** the polymer segment A is composed of polybutylene oxide, polydodecyl oxide, polyisoamyl oxide, polyoxetane, substituted polyoxetane, poly-α-pinene oxide, polystyrene oxide, polytetramethylene oxide, further aliphatic or aromatic polyoxyalkylenes having 4 to 30 carbon atoms per alkylene oxide, α,ω-polymethacrylatediols, α-ω-dihydroxyalkylpolydimethyl-siloxanes, macromonomers, telecheles or mixtures thereof.

11. Polyurethane dispersion according to any one of Claims 1 to 10, **characterized in that** component (A) (v) comprises a bishydroxyalkanecarboxylic acid.

12. Polyurethane dispersion according to Claim 11, **characterized in that** as bishydroxyalkanecarboxylic acid dimethylolpropionic acid is used.

13. Polyurethane dispersion according to any one of Claims 1 to 12, **characterized in that** the NCO/OH equivalent ratio in stage a₁) is set at 1.9 to 2.1 and the NCO/OH+NH equivalent ratio in stage a₂) is set at 0.95 to 1.05.

14. Polyurethane dispersion according to any one of Claims 1 to 13, **characterized in that** the NCO/OH equivalent ratio of components (A)(i), (A) (ii), (A) (iii), (A) (iv), (A) (v) and (B) (ii) in stage b) is set at a value of 1.25 to 2.5, preferably 1.4 to 2.0.

15. Polyurethane dispersion according to any one of Claims 1 to 14, **characterized in that** the neutralizing component (E) is added in an amount such that the degree of neutralization, based on the free carboxylic acid and/or sulfonic acid groups of the polyurethane prepolymer, is 25 to 100 equivalent%, preferably 50 to 100 equivalent%.

16. Polyurethane dispersion according to any one of Claims 1 to 15, **characterized in that** the chain extender component (G) is added in an amount such that the degree of chain extension, based on the free isocyanate groups of the polyurethane prepolymer, is 50 to 100 equivalent%, preferably 70 to 80 equivalent %.

17. Polyurethane dispersion according to any one of Claims 1 to 16, **characterized in that** the chain stopper component (H) is added in an amount such that the degree of chain termination, based on the free isocyanate groups of the polyurethane prepolymer, is 0 to 50 equivalent%, preferably 20 to 30 equivalent%.

18. Polyurethane dispersion according to any one of Claims 1 to 17, **characterized in that** the ethylene oxide group content of the polyurethane polymer formed from components (A), (B), (C), (E), (G) and (H) is 0.5% to 10% by weight, preferably 2% to 5% by weight.

19. Polyurethane dispersion according to any one of Claims 1 to 18, **characterized in that** in the polyurethane polymer formed from components (A), (B), (C), (E), (G) and (H) the amount of carboxylate and/or sulfonate groups is set at 5 to 25 meq· (100 g)-¹, preferably at 10 to 20 meq· (100 g)⁻¹, and the acid number at 5 to 30 meq KOH·g⁻¹, preferably at 10 to 25 meq KOH·g⁻¹.

20. Polyurethane dispersion according to any one of Claims 1 to 19, **characterized in that** the solids content of polyurethane polymer composed of components (A), (B), (C), (E), (G) and (H) is set at 30% to 70% by weight, preferably 50% to 55% by weight, based on the total amount of the polyurethane dispersion.

21. Polyurethane dispersion according to any one of Claims 1 to 20, **characterized in that** the average particle size of the micelles is 50 to 500 nm, preferably 100 to 400 nm.

22. Polyurethane dispersion according to any one of Claims 1 to 21, **characterized in that** the average molar mass (number average) is 25 000 to 500 000 daltons.

23. Process for preparing an anionically modified, electrosterically stabilized polyurethane dispersion according to any one of Claims 1 to 22, **characterized in that**
a) a hydrophilic and solvent-free macromonomer (A) (ii) with monomodal molecular mass distribution, is prepared by
a₁) reacting 50 to 100 parts by weight of a hydrophilic alkyl- or arylpolyalkylene glycol (A)(i) with 1 to 100 parts by weight of a polyisocyanate component (B)(i) optionally in the presence of a catalyst in the absence of solvents, the reaction conditions and the selectivities of components (A)(i) and (B)(i) being chosen such that only one isocyanate group of component (B)(i) reacts with component (A) (i), and subsequently
a₂) reacting the uniform preadduct from stage a₁) completely with 0.5 to 200 parts by weight of a compound (C) in the absence of solvents, the reaction conditions and the selectivity of component (C) being chosen such that only one reactive group of component (C) reacts with the free isocyanate group(s) of the preadduct,
b) the polyurethane dispersion is prepared by
b₁) reacting 2 to 50 parts by weight of the hydrophilic and solvent-free macromonomer (A) (ii) with 25 to 250 parts by weight of the polyisocyanate component (B) (i), optionally in the presence of 0 to 50 parts by weight of a solvent component (D) and also of a catalyst,
b₂) reacting the polyurethane preadduct from stage b₁) with 50 to 100 parts by weight of a polymeric polyol (A)(iii) and optionally with 0.5 to 10 parts by weight of a low molecular mass polyol component (A) (iv), optionally in the presence of a catalyst,
b₃) reacting the homogeneous polyurethane preadduct from stage b₂) with 2 to 20 parts by weight of a polyol component (A)(v), optionally in the presence of a catalyst,
b₄) admixing the homogeneous polyurethane prepolymer from stage b₃), before or during dispersion in 50 to 1500 parts by weight of water, with 2 to 20 parts by weight of a neutralizing component (E),
b₅) dispersing the optionally (partially) neutralized polyurethane prepolymer from stage b₄) in 50 to 1500 parts by weight of water, which optionally further contains 0 to 100 parts by weight of a formulating component (F), and finally
b₆) reacting the (partially) neutralized polyurethane prepolymer dispersion from stage b₅) with 3 to 60 parts by weight of a chain extender component (G) and also, subsequently or simultaneously, with 0 to 30 parts by weight of a chain stopper component (H).

24. Process according to Claim 23, **characterized in that** in reaction stage a₁) component (B)(i) is metered into component (A) (i), or component (A) (i) is metered into component (B)(i).

25. Process according to Claim 23, **characterized in that** reaction stages a₁) and a₂) are carried out at a temperature of 10 to 30°C.

26. Process according to any one of Claims 23 to 25, **characterized in that** reaction stages b₁), b₂) and b₃) are carried out at a temperature of 60 to 120°C, preferably of 80 to 100°C.

27. Process according to any one of Claims 23 to 26, **characterized in that** reaction stages b₄) and b₅) are carried out at a temperature of 40 to 60°C.

28. Process according to any one of Claims 23 to 27, **characterized in that** reaction stage b₆) is carried out at 30 to 50°C.

29. Process according to any one of Claims 23 to 28, **characterized in that** following reaction stage b₆) any free NCO groups still present are completely chain-extended with water.

30. Use of the polyurethane dispersion according to any one of Claims 1 to 22 as a binder in liquid and pasty construction products, in the form of
(a) synthetic resin plasters,
(b)bitumen compounds and asphalt, and
(c)individual components of external insulation and finishing systems, optionally with the addition of mineral binders.

31. Use of the polyurethane dispersion according to any one of Claims 1 to 22 as a modifying component for mineral construction products, in the form of
(a)mortar additive dispersions for screeds, trowel-applied flooring compounds, and leveling components,
(b)mortar additive dispersions for construction adhesives, tile adhesives and EIFS adhesives,
(c)dispersions as mortar additives for 2-component grouts,
(d)mortar additive dispersions for concrete repair systems, and
(e)polymer dispersions as additives in concrete construction work.

32. Use of the polyurethane dispersion according to any one of Claims 1 to 21 as a binder in formulations - optionally comprising mineral binders - for sport floor coverings and tennis court surfacings, in the form of
(a) binders for elastic layers, composed of rubber granules or of fibers with or without adjuvants,
(b)adhesion promoters or primers for the subfloors of sport floor coverings,
(c)spray coatings, with or without texturing fillers, for application to rigid or elastic base surfaces,
(d)leveling coatings for application to rigid or elastic base surfaces,
(e)troweling compounds for sealing the pores of rigid or elastic base surfaces,
(f)adhesives for bonding prefabricated elastic layers,
(g)sealer coatings, with or without pigments, and
(h) line paints.

33. Use of the polyurethane dispersion according to any one of Claims 1 to 22 as a binder in formulations - optionally comprising mineral binders - for crack-bridging coating systems, in the form of
a) prime, float or top layers, and also spray coatings or sealer coatings on preferably primed surfaces of built structures,
b) (optionally flame-retarded) roof coatings or roof-coating materials, and
c) (optionally flame-retarded) seals for built structures in opencast or underground mining.

34. Use of the polyurethane dispersion according to any one of Claims 1 to 22 as a binder for producing optionally cement-based, aqueous high-build coatings.

35. Use of the polyurethane dispersion according to any one of Claims 1 to 22 as a binder for coatings, sealants, printing inks, paints and varnishes, primers, adhesives, membranes for the surfaces of mineral building materials, such as concrete, gypsum, ceramic, clay, and cement, and also for the surfaces of glass, rubber, wood and woodbase materials, plastic, metal, paper, and composites.

36. Use of the polyurethane dispersion according to any one of Claims 1 to 22 as a binder for coating real and synthetic leathers and also paper and cardboard articles and for producing synthetic leathers.

37. Use according to any one of Claims 30 to 36, **characterized in that** the polyurethane dispersion is used in one-, two- or multi-component form, it being possible for the further components to comprise formulating ingredients and/or hardeners.

38. Use according to any one of Claims 30 to 36, **characterized in that** the polyurethane dispersion is used in combination with formulating ingredients and, if desired, further polymers in the form of redispersible powders.

39. Use according to any one of Claims 30 to 36, **characterized in that** the polyurethane dispersion is used as a binder in amounts of 0.5% to 75% by weight, based on the fully formulated end product.

## Revendications

1. Dispersion aqueuse de polyuréthane, modifiée anioniquement, stabilisée électrostériquement, pouvant être obtenue par
a) la préparation d'un macromonomère (A)(ii) hydrophile et exempt de solvant présentant une répartition monomodale des masses moléculaires, où on
a₁) fait réagir 50 à 100 parties en poids d'un alkylpolyalkylèneglycol et/ou arylpolyalkylèneglycol hydrophile (A)(i) avec un groupe hydroxyle primaire et/ou secondaire et/ou tertiaire réactif par rapport aux groupes isocyanate et présentant une masse moléculaire de 250 à 5000 Daltons avec 1 à 100 parties en poids d'un polyisocyanate (B)(i), constitué par au moins un diisocyanate, un polyisocyanate, un dérivé de polyisocyanate ou un homologue de polyisocyanate présentant deux ou plus de deux groupes isocyanate cycloaliphatiques ou aromatiques de même réactivité ou de réactivité différente, le cas échéant en présence d'un catalyseur,
a₂) fait réagir le préproduit d'addition de l'étape a₁) complètement avec 0,5 à 200 parties en poids d'un composé (C) présentant deux ou plus de deux groupes amino et/ou hydroxyle primaires et/ou secondaires réactifs par rapport aux groupes isocyanate et présentant une masse moléculaire de 50 à 500 Daltons, les conditions de réaction et la sélectivité du composant (C) étant choisies de manière telle que seulement un groupe réactif du composant (C) réagit avec le/les groupe(s) isocyanate libre(s) du préproduit d'addition, ainsi que
b) la préparation de la dispersion de polyuréthane, où on
b₁) transforme 2 à 50 parties en poids du macromonomère (A) (ii) hydrophile et exempt de solvant présentant une répartition monomodale des masses moléculaires avec deux ou plus de deux groupes hydroxyle réactifs par rapport aux groupes isocyanate et présentant une masse moléculaire de 500 à 5500 Daltons avec 25 à 250 parties en poids d'un composant polyisocyanate (B)(ii), constitué par au moins un polyisocyanate, un dérivé de polyisocyanate ou un homologue de polyisocyanate présentant deux ou plus de deux groupes isocyanate (cyclo)aliphatiques ou aromatiques, le cas échéant avec addition de 0 à 50 parties en poids d'un composant de solvant (D) et le cas échéant en présence d'un catalyseur,
b₂) transforme le préproduit d'addition de polyuréthane de l'étape b₁) avec 50 à 100 parties en poids d'un polyol polymère (A)(iii) présentant deux ou plus de deux groupes hydroxyle réactifs par rapport aux groupes isocyanate et une masse moléculaire de 500 à 5000 Daltons
et le cas échéant
avec 0,5 à 10 parties en poids d'un composant polyol (A)(iv) de bas poids moléculaire présentant 2 ou plus de deux groupes hydroxyle et un poids moléculaire de 50 à 499 Daltons, le cas échéant en présence d'un catalyseur,
b₃) transforme le préproduit d'addition de polyuréthane de l'étape b₂) avec 2 à 20 parties en poids d'un composant polyol (A)(v) de bas poids moléculaire et anioniquement modifiable présentant un, deux ou plus de deux groupes hydroxyle réactifs par rapport aux groupes isocyanate et un ou plusieurs groupe(s) acide carboxylique et/ou acide sulfonique inertes, qui peuvent être transformés totalement ou partiellement en groupes carboxylate ou, selon le cas, sulfonate à l'aide de bases ou qui se trouvent déjà sous forme de groupes carboxylate et/ou sulfonate, et présentant une masse moléculaire de 100 à 1000 Daltons, le cas échéant en présence d'un catalyseur,
b₄) ajoute au prépolymère de polyuréthane de l'étape b₃), avant ou pendant la dispersion dans l'eau, en vue d'une neutralisation partielle ou complète des groupes acides, 2 à 20 parties en poids d'un composant de neutralisation (E),
b₅) disperse le prépolymère de polyuréthane le cas échéant (partiellement) neutralisé de l'étape b₄) dans 50 à 1500 parties en poids d'eau qui contient le cas échéant encore 0 à 100 parties en poids d'un composant de formulation (F), et enfin b₆) transforme la dispersion de prépolymère de polyuréthane (partiellement) neutralisé de l'étape b₅) avec 3 à 60 parties en poids d'un composant d'allongement de chaîne (G) ainsi qu'ensuite ou simultanément avec 0 à 30 parties en poids d'un composant d'arrêt de chaîne (H).

2. Dispersion de polyuréthane selon la revendication 1, **caractérisée en ce qu'**il s'agit, pour le composant (A)(i), de copolymères et/ou de copolymères statistiques et/ou de copolymères à blocs, constitués par 90 à 10% en poids d'oxyde d'éthylène et 10 à 90% en poids d'autres oxydes d'alkylène comprenant 4 à 30 atomes de carbone par oxyde d'alkylène, avec un groupe hydroxyle primaire et/ou secondaire et/ou tertiaire.

3. Dispersion de polyuréthane selon la revendication 1 ou 2, **caractérisée en ce qu'**il s'agit pour le composant (A)(i) d'un alkylpoly-(oxyde d'éthylène-co/aléatoire-oxyde d'alkylène) et/ou alkylpoly-(oxyde d'éthylène-bloc-oxyde d'alkylène) et/ou sodium-sulfonatopropylpoly-(oxyde d'éthylène-co/aléatoire-oxyde d'alkylène) et/ou sodiumsulfonatopropylpoly-(oxyde d'éthylène-bloc-oxyde d'alkylène) monofonctionnel présentant un groupe hydroxyle primaire et/ou secondaire et/ou tertiaire, constitué par 90 à 10% en poids d'oxyde d'éthylène et 10 à 90% en poids d'un autre oxyde d'alkylène.

4. Dispersion de polyuréthane selon l'une quelconque des revendications 1 à 3, **caractérisée en ce qu'**il s'agit pour l'oxyde d'alkylène d'oxyde de propylène, d'oxyde de butylène, d'oxyde de dodécyle, d'oxyde d'isoamyle, d'oxétane, d'oxétanes substitués, d'oxyde d'α-pinène, d'oxyde de styrène, de tétrahydrofuranne ou d'autres oxydes d'alkylène aliphatiques ou aromatiques comprenant 4 à 30 atomes de carbone par oxyde d'alkylène.

5. Dispersion de polyuréthane selon l'une quelconque des revendications 1 à 4, **caractérisée en ce qu'**il s'agit, pour le composant (A)(i) de polyalkylèneglycols monofonctionnels et pour le composant (B)(i) d'un polyisocyanate au moins fonctionnel.

6. Dispersion de polyuréthane selon l'une quelconque des revendications 1 à 5, **caractérisée en ce qu'**il s'agit pour le composant (B)(i) de 2,4-toluènediisocyanate, de mélanges d'isomères de 2,4-toluènediisocyanate et de 2,6-toluènediisocyanate ou de mélanges d'isomères d'isophoronediisocyanate.

7. Dispersion de polyuréthane selon l'une quelconque des revendications 1 à 6, **caractérisée en ce qu'**il s'agit, pour le composant (C), de diéthanolamine.

8. Dispersion de polyuréthane selon l'une quelconque des revendications 1 à 7, **caractérisée en ce qu'**on utilise comme composant (A)(iii) des polyalkylèneglycols linéaires ou, selon le cas, difonctionnels présentant une masse moléculaire de 500 à 5000 Daltons.

9. Dispersion de polyuréthane selon l'une quelconque des revendications 1 à 8, **caractérisée en ce qu'**il s'agit, pour le composant (A)(iii) de polypropylèneglycols et/ou de copolymères à blocs modifiés de manière hydrophobe présentant une structure ABA, BAB ou (AB)ₙ, où A représente un segment polymère avec des propriétés d'hydrofugation et B un segment polymère à base de poly (oxyde de propylène).

10. Dispersion de polyuréthane selon la revendication 9, **caractérisée en ce que** le segment polymère A est constitué par du poly(oxyde de butylène), du poly(oxyde de dodécyle), du poly(oxyde d'isoamyle), du polyoxétane, du polyoxétane substitué, du poly(oxyde d'α-pinène), du poly(oxyde de styrène), du poly(oxyde de tétraméthylène), d'autres polyoxyalkylènes aliphatiques ou aromatiques comprenant 4 à 30 atomes de carbone par oxyde d'alkylène, d'α,ω-polyméthacrylate-diols, d'α,ω-dihydroxyalkylpolydiméthylsiloxanes, de macromonomères, de polymères téléchéliques ou leurs mélanges.

11. Dispersion de polyuréthane selon l'une quelconque des revendications 1 à 10, **caractérisée en ce qu'**il s'agit, pour le composant (A)(v) d'un acide bishydroxyalcanecarboxylique.

12. Dispersion de polyuréthane selon la revendication 11, **caractérisée en ce qu'**on utilise de l'acide diméthylolpropionique comme acide bishydroxyalcanecarboxylique.

13. Dispersion de polyuréthane selon l'une quelconque des revendications 1 à 12, **caractérisée en ce que** le rapport d'équivalents NCO/OH dans l'étape a₁) est réglé à 1,9 jusqu'à 2,1 et le rapport d'équivalents NCO/OH+NH dans l'étape a₂) à 0,95 jusqu'à 1,05.

14. Dispersion de polyuréthane selon l'une quelconque des revendications 1 à 13, **caractérisée en ce que** le rapport d'équivalents NCO/OH du composant (A) (i), (A) (ii), (A) (iii), (A) (iv), (A) (v) et (B) (ii) dans l'étape b) est réglé à une valeur de 1,25 à 2,5, de préférence de 1,4 à 2,0.

15. Dispersion de polyuréthane selon l'une quelconque des revendications 1 à 14, **caractérisée en ce que** le composant de neutralisation (E) est ajouté en une quantité telle que le degré de neutralisation, par rapport aux groupes acide carboxylique et/ou acide sulfonique libres du prépolymère de polyuréthanne se situe à 25 jusqu'à 100% en équivalent, de préférence à 50 jusqu'à 100% en équivalent.

16. Dispersion de polyuréthane selon l'une quelconque des revendications 1 à 15, **caractérisée en ce que** le composant d'allongement de chaîne (G) est utilisé en une quantité telle que le degré d'allongement de chaîne, par rapport aux groupes isocyanate libres du prépolymère de polyuréthane se situe à 50 jusqu'à 100% en équivalent, de préférence à 70 jusqu'à 80% en équivalent.

17. Dispersion de polyuréthane selon l'une quelconque des revendications 1 à 16, **caractérisée en ce que** le composant d'arrêt de chaîne (H) est utilisé en une quantité telle que le degré d'arrêt de chaîne, par rapport aux groupes isocyanate libres du prépolymère de polyuréthane se situe à 0 jusqu'à 50% en équivalent, de préférence à 20 jusqu'à 30% en équivalent.

18. Dispersion de polyuréthane selon l'une quelconque des revendications 1 à 17, **caractérisée en ce que** dans le polymère de polyuréthane constitué par les composants (A), (B), (C), (E), (G) et (H), la teneur en groupes oxyde d'éthylène se situe à 0,5 jusqu'à 10% en poids, de préférence à 2 jusqu'à 5% en poids.

19. Dispersion de polyuréthane selon l'une quelconque des revendications 1 à 18, **caractérisée en ce que** dans le polymère de polyuréthane constitué par les composants (A), (B), (C), (E), (G) et (H), la teneur en groupes carboxylate et/ou sulfonate est réglée à 5 jusqu'à 25 méq (100 g)⁻¹, de préférence à 10 jusqu'à 20 méq (100 g)⁻¹, et l'indice d'acide est réglé à 5 jusqu'à 30 méq KOH g⁻¹, de préférence à 10 jusqu'à 25 méq KOH g⁻¹.

20. Dispersion de polyuréthane selon l'une quelconque des revendications 1 à 19, **caractérisée en ce que** la teneur en solides de polymère de polyuréthane, constitué par les composants (A), (B), (C), (E), (G) et (H) est réglée à 30 jusqu'à 70% en poids, de préférence à 50 jusqu'à 55% en poids, par rapport à la quantité totale de la dispersion de polyuréthane.

21. Dispersion de polyuréthane selon l'une quelconque des revendications 1 à 20, **caractérisée en ce que** la grosseur de particule moyenne des micelles est de 50 à 500 nm, de préférence de 100 à 400 nm.

22. Dispersion de polyuréthane selon l'une quelconque des revendications 1 à 21, **caractérisée en ce que** la masse molaire moyenne (moyenne numérique) est de 25 000 à 500 000 Daltons.

23. Procédé pour la préparation d'une dispersion de polyuréthane modifiée anioniquement, stabilisée électrostériquement selon l'une quelconque des revendications 1 à 22, **caractérisé en ce qu'**on
a) prépare un macromonomère (A)(ii) hydrophile et exempt de solvant présentant une répartition monomodale des masses moléculaires, **en ce qu'**on
a₁) fait réagir 50 à 100 parties en poids d'un alkylpolyalkylèneglycol ou arylpolyalkylèneglycol (A) (i) avec 1 à 100 parties en poids d'un composant polyisocyanate (B)(i) le cas échéant en présence d'un catalyseur en l'absence de solvants, où les conditions de réaction et les sélectivités des composants (A)(i) et (B)(i) sont choisies de manière telle que seulement un groupe isocyanate du composant (B)(i) réagit avec le composant (A)(i), puis
a₂) fait réagir le préproduit d'addition uniforme de l'étape a₁) complètement avec 0,5 à 200 parties en poids d'un composé (C) en l'absence de solvants, les conditions de réaction et la sélectivité du composant (C) étant choisies de manière telle que seulement un groupe réactif du composant (C) réagit avec le/les groupe(s) isocyanate libre(s) du préproduit d'addition,
b) prépare la dispersion de polyuréthane **en ce qu'**on
b₁) transforme 2 à 50 parties en poids du macromonomère (A)(ii) hydrophile et exempt de solvant avec 25 à 250 parties en poids d'un composant polyisocyanate (B)(i), le cas échéant en présence de 0 à 50 parties en poids d'un composant de solvant (D) ainsi que d'un catalyseur,
b₂) fait réagir le préproduit d'addition de polyuréthane de l'étape b₁) avec 50 à 100 parties en poids d'un polyol polymère (A) (iii) et le cas échéant avec 0,5 à 10 parties en poids d'un composant polyol de bas poids moléculaire (A)(iv) le cas échéant en présence d'un catalyseur,
b₃) transforme le préproduit d'addition de polyuréthane homogène de l'étape b₂) avec 2 à 20 parties en poids d'un composant polyol (A)(v) le cas échéant en présence d'un catalyseur,
b₄) ajoute au prépolymère de polyuréthane homogène de l'étape b₃), avant ou pendant la dispersion dans 50 à 1500 parties en poids d'eau, avec 2 à 20 parties en poids d'un composant de neutralisation (E),
b₅) disperse le prépolymère de polyuréthane le cas échéant (partiellement) neutralisé de l'étape b₄) dans 50 à 1500 parties en poids d'eau qui contient le cas échéant encore 0 à 100 parties en poids d'un composant de formulation (F), et enfin
b₆) transforme la dispersion de prépolymère de polyuréthane (partiellement) neutralisé de l'étape b₅) avec 3 à 60 parties en poids d'un composant d'allongement de chaîne (G) ainsi qu'ensuite ou simultanément avec 0 à 30 parties en poids d'un composant d'arrêt de chaîne (H).

24. Procédé selon la revendication 23, **caractérisé en ce que** dans l'étape de réaction a₁) le composant (B)(i) est dosé dans le composant (A)(i) ou le composant (A)(i) est dosé dans le composant (B)(i).

25. Procédé selon la revendication 23, **caractérisé en ce que** les étapes de réaction a₁) et a₂) sont réalisées à une température de 10 à 30°C.

26. Procédé selon l'une quelconque des revendications 23 à 25, **caractérisé en ce que** les étapes de réaction b₁), b₂) et b₃) sont réalisées à une température de 60 à 120°C, de préférence de 80 à 100°C.

27. Procédé selon l'une quelconque des revendications 23 à 26, **caractérisé en ce que** les étapes de réaction b₄) et b₅) sont réalisées à une température de 40 à 60°C.

28. Procédé selon l'une quelconque des revendications 23 à 27, **caractérisé en ce que** l'étape de réaction b₆) est réalisée à une température de 30 à 50°C.

29. Procédé selon l'une quelconque des revendications 23 à 28, **caractérisé en ce qu'**après l'étape de réaction b₆) on allonge la chaîne de la totalité des groupes NCO libres éventuellement encore présents avec de l'eau.

30. Utilisation de la dispersion de polyuréthane selon l'une quelconque des revendications 1 à 22 comme liant dans des produits de construction liquides et pâteux sous forme de
(a)enduits de résine synthétique,
(b)masses de bitume et asphalte, ainsi que
(c)composants individuels de systèmes composites d'isolation thermique, le cas échéant avec addition de liants minéraux.

31. Utilisation de la dispersion de polyuréthane selon l'une quelconque des revendications 1 à 22 comme composant d'amélioration de produits de construction minéraux sous forme de
(a)dispersions d'additifs pour mortier destinées aux chapes, masses de bouchage de sol et masses d'étalement,
(b)dispersions d'additifs pour mortier destinées aux colles de construction, de carreaux et de systèmes composites d'isolation thermique,
(c)dispersions comme additif pour mortier destinées aux barbotines d'étanchéité à 2 composants,
(d)dispersions d'additifs pour mortier destinées aux systèmes de réparation de béton ainsi que (e)dispersions polymères comme additif pour les constructions en béton.

32. Utilisation de la dispersion de polyuréthane selon l'une quelconque des revendications 1 à 21 comme liant dans des formulations - contenant le cas échéant des liants minéraux - pour recouvrement de sols de terrains de sport et de tennis sous forme de
(a)liants pour couches élastiques, constituées par des granulats de caoutchouc ou des fibres ainsi que le cas échéant des additifs,
(b)promoteurs d'adhérence ou apprêts pour les sous-couches de recouvrements de sol de terrains de sport,
(c)revêtements projetés, le cas échéant avec des charges structurées, destinés à être appliqués sur des sous-couches élastiques ou rigides,
(d)revêtements d'étalement destinés à être appliqués sur des sous-couches élastiques ou rigides,
(e)masses de bouchage pour l'obturation de pores de sous-couches élastiques ou rigides,
(f)additifs pour le collage de couches élastiques préfabriquées,
(g) scellements, le cas échéant avec des pigments, ainsi que
(h)encres pour traçage de lignes.

33. Utilisation de la dispersion de polyuréthane selon l'une quelconque des revendications 1 à 22 comme liant dans des formulations - contenant le cas échéant des liants minéraux - pour des systèmes de revêtement couvrant les fissures sous forme de
a) couches d'apprêt, couches intermédiaires ou couches de recouvrement ainsi que revêtements projetés ou scellages sur des surfaces de construction de préférence apprêtées,
b) recouvrements ou peintures pour toitures (le cas échéant ignifugés), ainsi que
c) étanchéités (le cas échéant ignifugées) de constructions hors sol ou souterraines.

34. Utilisation de la dispersion de polyuréthane selon l'une quelconque des revendications 1 à 22 comme liant pour la préparation de revêtements épais aqueux, le cas échéant à base de ciment.

35. Utilisation de la dispersion de polyuréthane selon l'une quelconque des revendications 1 à 22 comme liant pour revêtements, masses d'étanchéité, encres d'imprimerie, encres et laques, apprêts, adhésifs, membranes pour les surfaces de matériaux de construction minéraux, tels que par exemple le béton, le plâtre, la céramique, l'argile, le ciment ainsi que pour les surfaces de verre, de caoutchouc, de bois et de matériaux à base de bois, de matériau synthétique, de métal, de papier, de matériaux composites.

36. Utilisation de la dispersion de polyuréthane selon l'une quelconque des revendications 1 à 22 comme liant pour le revêtement de cuirs véritables et synthétiques ainsi que de papier et de cartonnages ainsi que pour la fabrication de cuirs synthétiques.

37. Utilisation selon l'une quelconque des revendications 30 à 36, **caractérisée en ce que** la dispersion de polyuréthane est utilisée sous une forme à un, deux ou plus de deux composants, où les autres composants peuvent contenir des constituants de formulation et/ou des agents de durcissement.

38. Utilisation selon l'une quelconque des revendications 30 à 36, **caractérisée en ce que** la dispersion de polyuréthane est utilisée en combinaison avec des constituants de formulation et le cas échéant d'autres polymères sous forme de poudres en dispersion redispersibles.

39. Utilisation selon l'une quelconque des revendications 30 à 36, **caractérisée en ce que** la dispersion de polyuréthane est utilisée comme liant en des quantités de 0,5 à 75% en poids par rapport au produit fini formulé.
